Europäisches Patentamt

European Patent Office

Office européen des brevets

(11) Publication number : **0 466 516 A2**

# EUROPEAN PATENT APPLICATION

(21) Application number : 91306377.2

(22) Date of filing : 15.07.91

(51) Int. Cl.⁵ : **G06F 15/20**

(30) Priority : **13.07.90 US 553449**
**13.07.90 US 553545**

(43) Date of publication of application :
**15.01.92 Bulletin 92/03**

(84) Designated Contracting States :
**AT BE CH DE DK ES FR GB GR IT LI LU NL SE**

(71) Applicant : **ARTIFICIAL LINGUISTICS INC**
**2301 North Akard, Suite 200**
**Dallas, Texas 75201 (US)**

(72) Inventor : **Wical, Kelly Joseph**
**3953 Merrell**
**Dallas Texas 75229 (US)**

(74) Representative : **Lawrence, Malcolm Graham**
**et al**
**Hepworth, Lawrence, Bryer & Bizley 2nd Floor**
**Gate House South, West Gate**
**Harlow Essex CM20 1JN (GB)**

(54) **Text analysis system.**

(57)    A writing analysis system includes a processor (340) that receives a textual input (342) and is operable to generate a plurality of constituent attractor values (344) that comprise the contextual, thematic and stylistic form of the sentence. A writing analysis system is formed of a first part (346) and a second part (348). The writing analysis system receives as an input the contextual and syntactic form of the sentence and also the definitional characteristics of the words from a lexicon (26), which definitional characteristics define the word as used in the sentence for a given language. The writing analysis system utilizes a plurality of process blocks (356) which apply predetermined writing principles, relating grammar, writing style and audience aspects, to the contextual form of the sentence in order to make observations thereon, which observations are stored as error attractor values (358). These observations are then tested in accordance with error feedback routines and, if an error exists, the form of the sentence is altered by an input to the processor (340) from the error feedback routines (352). This varies the form of the sentence for input to the writing analysis process blocks (356). The contextual form of the sentence is derived by analyzing the words of the sentence in accordance with predetermined linguistic principles that make up a given language. This analysis is performed by applying a non-linear process to the words of the sentence, the sentence being representative of a portion of a chaos system.

EP 0 466 516 A2

DISCOURSE

CHAOTIC
INPUT
STREAM

*FIG. 1*

## TECHNICAL FIELD OF THE INVENTION

The present invention pertains in general to a text analysis system, and more particularly, to a text analysis system for generating the form of a sentence and then analyzing the form of the sentence in accordance with general grammatical and writing style principles.

## BACKGROUND OF THE INVENTION

Discourse from a general standpoint is the capacity of orderly thought or procedure. In conversation, it is the orderly flow of ideas wherein certain concepts or topics are grouped together. For example, in a conversation, particular concepts during the conversation will express themselves in a more dominant manner than other concepts. As the conversation ensues, one topic or concept will overtake or dominate another, and it will then become the dominant concept or topic of a given conversation at a given point in time. Further, when looked at in a broader sense, the topics can be grouped together to provide groups of common topics, which groups also flow in the conversation, with one dominant group overtaking another.

One example of a discourse is a book wherein the lowest level of a topic exists in sentences. Generally, a sentence is a grammatically self-contained language unit consisting of a word or a syntactically related group of words that express an assertion, a question, a command, a wish, or an exclamation; that in writing usually begins with a capital letter and concludes with appropriate ending punctuation; and that in speaking is phonetically distinguished by various patterns of stress, pitch and pause. Each sentence in a discourse can be said to have a topic, which topics in the discourse flow can run together, or the topics can be separate and distinct for sequential sentences. In general, sentences that are grouped together with a common relationship are typically organized by paragraph. The paragraph is just one subdivision of a written composition that consists of one or more sentences and deals with one point or gives the words of one speaker. It can be said that a paragraph is the lowest form of knowledge in a given written composition since a sentence by itself does not necessarily convey knowledge. It is the organization of sentences dealing with a given topic that provides this knowledge. Higher levels of organization can be seen in, for example, a section, a chapter, etc., extending all the way up to the document level, which is the highest level. Therefore, it can be seen that there is some hierarchical structure to a discourse.

Analysis of discourse must be initiated at the basic level, that of the sentence. A number of systems have been developed for the automated recognition of syntactic information. Systems of this nature typically take the approach that theoretical linguistic formalisms that have been developed to identify correct grammatical constructions can be arranged in a hierarchical structure. This type of approach assumes that language is linear. However, because the number of combinations of possible parts of speech for a string of words escalates exponentially with string length, these systems in general are limited to operating on text having a small, well-defined vocabulary or to operating on a more general text but dealing with a limited range of syntactic features. To solve these problems, such procedures as text annotation have been utilized which generally involve annotation of each word of the sentence with various tags and data codes in the form of a lexicon. A morphological analyzer which recognizes prefixes, suffixes and other structural attributes of words is then utilized to identify certain classes of words that are not found in the stored dictionary. However, this system still utilizes a hierarchical structure in that it must apply templates and transformation rules to determine grammatically correct parts of a sentence. Such a system has been described in U.S. Patent No. 4,864,501, issued to Henry Kucera et al. on September 5, 1989.

Once the sentence has been analyzed from the standpoint of its contextual makeup, the next requirement in analyzing a discourse is to determine the relationships that are taking place in a sentence. These relationships only express their full meaning when the connotation of the given words is known. Determination of this connotation is virtually impossible when analyzing a sentence in isolation, due to the large number of connotations a word can have and the level of ambiguity that a sentence has when isolated from the discourse. Therefore, the sentence must be analyzed at a much higher level. For example, the sentence "The large boy hits the ball" would have a relationship between "large" and "boy", between "boy" and "hit" and between "boy" and "ball". While connotations such as "boy" and "ball" may sometimes be ascertained at the sentence level, additional information from other parts of the discourse would more clearly illustrate the correct connotations. In general, a piece of information or fact, as related by a sentence, has only minimal relevance by itself. It is the relationship of a sentence to the discourse that provides the greatest impact in the determination of connotations.

Concepts, when looked at in a hierarchical nature, are relationships that at one level are relatively small and isolated but relate upward to larger concepts, which in turn are related up to even larger and more general or less specific concepts. This hierarchical nature of how concepts are related is generally encompassed in the organization of thesauri. For example, the most general levels would be abstract relations, space, matter,

EP 0 466 516 A2

intellect, volition and affections. These are further divided down into subcategories on a lower level of a hierarchical tree. Space, for example, can be divided into form, motion, dimension, etc., and these classifications can be divided even further. At the lowest level of this structure is an actual connotation of a word.

Expert systems have made use of these types of structures in developing taxonomonic trees for such applications as document classification. These have generally been referred to as semantic networks. One type of system describing such a network is disclosed in U.S. Patent No. 4,868,733, issued to Fujisawa et al. on September 19, 1989.

One disadvantage that has been recognized with respect to the hierarchical approach to organizing concepts is disclosed in U.S. Patent 4,912,648, issued to Irwin Tyler. Tyler discloses a six part system that operates on an information/knowledge base in which a user specifies the relationships of assertions in the database. The Tyler system is a fact-based expert system as opposed to a rule based expert system. This system addresses an indeterminate problem by its very nature without providing a "shoehorn fit", which is how most rule-based approaches to classification and grammatical analysis are modeled. In general, the Tyler system recognized that the development of relationships or concepts is an indeterminate problem since there are many factors in making decisions or even in analyzing the basic aspects of a language. These factors can never be known and, therefore, it is impossible to map the interaction of these factors. In his approach to developing an expert system, Tyler used the concept wherein complexities were partitioned into very small, logically cohesive chunks. This allowed independent treatment of these chunks in order to specify the relationships of the various chunks to one another. However, Tyler reduces his system to a fact based system with defined relationships between the small pieces of information.

In general, past approaches to analyzing the context and the content of a discourse have been from the standpoint of trying to place language, a nonlinear process, into a linear structure. Although it is recognized that language is non-linear, most approaches have attempted to linearize the language and also force it into a hierarchical structure of decision making based upon formulatized linguistic rules. For example, Kucera makes some broad ranging decisions of how to parse a sentence at various levels and then moves on to another lower level to make another set of decisions, and so on. The problem is that there are many nuances and subtleties in the general relationships of words in a sentence from a contextual standpoint. Therefore, a system that takes the Kucera approach can never be very accurate since the higher level decisions that are made in the hierarchical approach to analyzing language must by necessity be influenced by very small grammatical rules or relationships that for most sentences have little impact but do in aggregation effect the accuracy of any system. Therefore, to account for all of these nuances and subtleties would result in diminishing the hierarchical structure of a given analysis system and would be unwieldy, since the number of decisions that must be made at any one level would be unmanageable. This is due primarily to the fact that these approaches have tried to linearize language and place the decision making process in quantifiable levels.

Language can be considered to be a chaotic system with a large number of complex principles which have been developed over a long period of time. In a chaotic system, there are a large number of relationships, each relationship being microscopic in and of itself, but when combined provide an order of some sort in what would outwardly appear to be a randomness. The human mind does not analyze language in the form of a hierarchically based system but, rather, a subset influencing the outcome, i.e., an aggregate of many small "linguistic" principles organized and expressed through the context of the given language. This application of principles to a given input or stimulus results in the output of the contextual relationships inherent in the input. Although there are certain grammatical principles or relationships that can be applied to a given sentence structure, providing these relationships is only valid for a very small number of cases when looking at the language as a whole. Therefore, a linear approach to language wherein the linguistic principles are forced into a hierarchical tree structure would at best only provide limited accuracy to any system that was utilized to analyze language or, for that matter, any chaotic system.

## SUMMARY OF THE INVENTION

The present invention disclosed and claimed herein comprises a writing analysis system for a given language. The contextual form of a sentence that embodies the contextual relationship of the words in the sentence and the definitional characteristics that are expressed by each of the words in the sentence are stored in a storage area. The contextual relationships and the expressed definitional characteristics are based on linguistic principles of a given language. The contextual form of the sentences and then analyzed in accordance with writing principles, which writing principles are observed by the general populace that utilizes a given language as being a correct representation of the written use of the given language. Observations are made as to how the contextual form of the sentence compares with the writing principles. These observations are then output.

In another aspect of the present invention, the writing principles can comprise either grammatical principles,

4

punctuation principles or stylistic principles. The stylistic principles include observations about the style of the sentence in accordance with accepted writing styles of the given language. Observations are made about each of the grammatical, punctuation or stylistic principles and as to whether there is a disagreement between these principles and the contextual form of the sentence.

In yet another aspect of the present invention, the textual input of the sentence is received and then the contextual form of the sentence determined from this textual input. This is determined by first storing in a lexicon the definitional characteristics for the plurality of words in the given language, the definitional characteristics of the word defining how the word exists in the given language. The ones of the definitional characteristics that are expressed by the word in the context of the sentence are then determined in accordance with predetermined linguistic principles that exist for the given language. The contextual relationships of the words in the sentence are then determined in accordance with the predetermined linguistic principles for the given language. These contextual relationships and expressed definitional characteristics are then stored in the storage area as the contextual form of the sentence.

In a yet further aspect of the present invention, the observations output by the writing analysis system are tested in accordance with predetermined error principles. These error principles generate a select feedback signal that is a function of the observation tested and the contextual form of the sentence. The feedback signals are operable to alter the linguistic principles in a predetermined manner. Once fed back, the linguistic principles are altered and then the words of the sentence reprocessed to redetermine the contextual form of the sentence with these altered linguistic principles.

## BRIEF DESCRIPTION OF THE DRAWINGS

For a more complete understanding of the present invention and the advantages thereof, reference is now made to the following description taken in conjunction with the accompanying Drawings in which:

FIGURE 1 illustrates a diagrammatic view of discourse related to a chaotic input stream;
FIGURE 2 illustrates a block diagram of the discourse process of the present invention;
FIGURE 3 illustrates a block diagram of the portion of the processor for generating the knowledge database;
FIGURE 4 illustrates a block diagram of the individual processor blocks that generate the attractor values;
FIGURE 5 illustrates a block diagram of a serial processing scheme for generating the attractor values;
FIGURE 6 illustrates two attractors in schematic form;
FIGURE 7 illustrates a flow chart for a representative attractor processing block;
FIGURE 8 illustrates the structure of the attractor values for context, theme and style;
FIGURE 9 illustrates the process flow for generating the attractor values for the context, theme and style in a sequential manner;
FIGURE 10 illustrates a more detailed diagrammatic view of the theme attractor values and their associated attractors;
FIGURE 11a illustrates a diagrammatic of the attractor values for the theme layer;
FIGURE 11b illustrates a diagrammatic of the attractor values associated with the words w1 through wn;
FIGURES 12, 13 and 14 illustrate flow charts for the style indexes;
FIGURE 15 illustrates a flow chart for receiving a textual input and essentially initializing the system prior to actually processing the sentence groups through the attractors;
FIGURE 16 illustrates a flow chart for the root/ inflection key formation operation;
FIGURE 17 illustrates a flow chart for the ambiguity parse ordering operation;
FIGURE 18 illustrates a block diagram of the writing analysis system of the present invention;
FIGURE 19 illustrates a block diagram of the attractors for the first part of the writing analysis operation;
FIGURE 20 illustrates a block diagram for the error feedback system;
FIGURE 21 illustrates a flow chart for plotting the style indexes for a document;
FIGURE 22a and 22b illustrate the graphical outputs of the style indexes for reader retention and human interest; FIGURE 23 illustrates a flow chart for the interactive tutorial; and
FIGURE 24 illustrates a flow chart for the editing/marking output of the writing analysis system.

## DETAILED DESCRIPTION OF THE INVENTION

DISCOURSE PROCESSOR

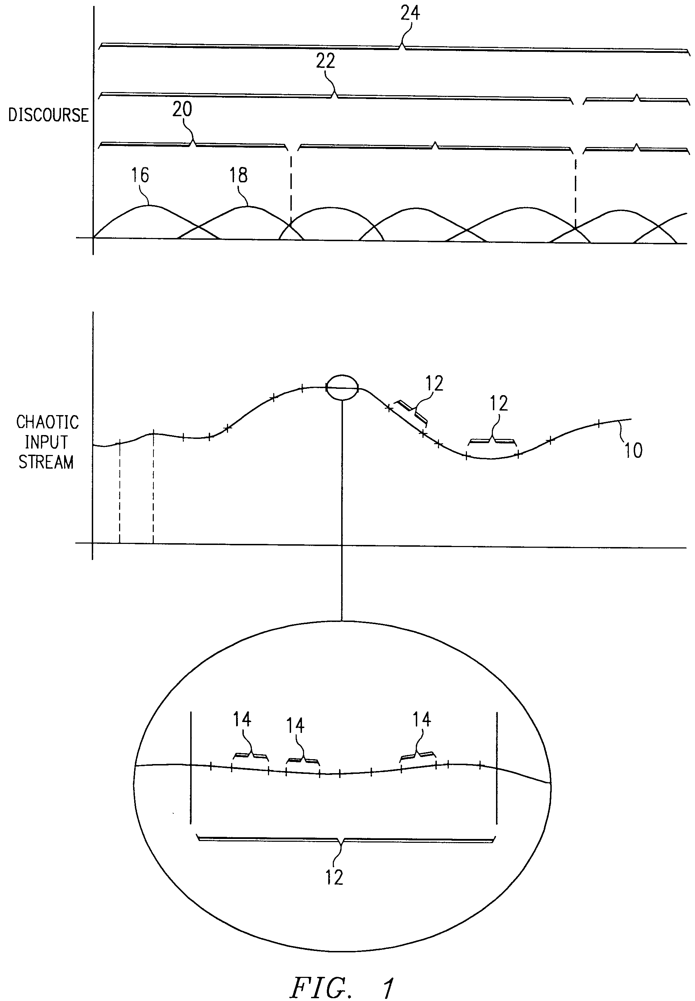

Referring now to FIGURE 1, there is illustrated a diagrammatic review of a chaotic input stream 10. In the examples below, the discourse processor will deal with language. However, language can be represented as a chaotic input stream. For any chaotic input stream, there exists divisions that represent the lowest recognizable form within the chaotic input stream. With respect to language, this constitutes the sentence which is a grammatically self-contained language unit that expresses an assertion, a question, a command, a wish or an exclamation. These may be of different lengths but are recognizable and distinguishable from one another. Each of these recognizable segments is represented by reference numeral 12.

Once a lowest recognizable and self-contained unit 12 is discriminated from the chaotic input stream, it can be viewed as being comprised of a plurality of constituents 14, which are illustrated in an expanded view of one of the elements 12. These constituents are equivalent to words in the English language. This constituent is the lowest level of the element 12, which represents a level that still communicates meaning but is not capable of being divisible into smaller units capable of independent use. Higher levels can also be defined within the element 12 which comprise groups of the constituents 14. This would parallel such concepts as phrases, etc., in grammar. The element 12 has little meaning when viewed in isolation.

The constituents within the bounds of the element 12 comprise the context or the form of that element 12. In the English language, this would be the context of the sentence. The context can be defined as the parts of the discourse that surround a word or passage and can throw light upon its relationships to allow one to determine the meaning.

When a sequence of elements 12 are examined in relationship to each other, they may have a common connection to each other, and they would express this in some type of commonality, typically the coherence or development of topics. This commonality is illustrated by a plurality of rising curves 16. As a commonality continues in the chaotic input stream, this commonality becomes more expressed. However, when the commonality decreases and another commonality takes over, this will be represented by a separate curve 18, curve 16 and 18 shown overlapping. A sequence of overlapping curves represents the discourse, showing the changing commonalities. In the English language, this would be termed the topic of a given discourse. The topic in a number of sentences may be similar or sequentially developed such that they can be classified as having a commonality among them. However, as topics vary in successive sentences, these topics result in different commonalities being expressed. In a discourse, this will continue through the entire sequence of words or for the entire chaotic input stream.

Discourse by its nature has a hierarchical structure to it. Although a given portion of the chaotic input stream may have a commonality varying as a function of time along a chaotic input stream, the different commonalities may in fact have a common link therebetween. In the English language, this would be the next higher level above a sentence, i.e., a groups of paragraphs. In FIGURE 1, this is represented by a bracket 20 which links together commonalities 16 and 18. If the commonality 16 represents five sentences in a paragraph having the same topic or development and the commonality 18 represents four sentences having the same topic or development, the bracket 20 would represent an area or section having nine sentences in two paragraphs with essentially the same overall meaning running therethrough. This structure continues upward resulting in a next level represented by bracket 22 and the next level represented by bracket 24. Bracket 22 could represent, for example, a section in the English language, and bracket 24 could represent, for example, a chapter. There is always a top level, which in the English language could be a document level. At the document level, this would represent, for example, a common thread running throughout an entire book. It is one aspect of the invention to move down through the discourse to the sentence level and extract the commonality therefrom in addition to classifying this commonality.

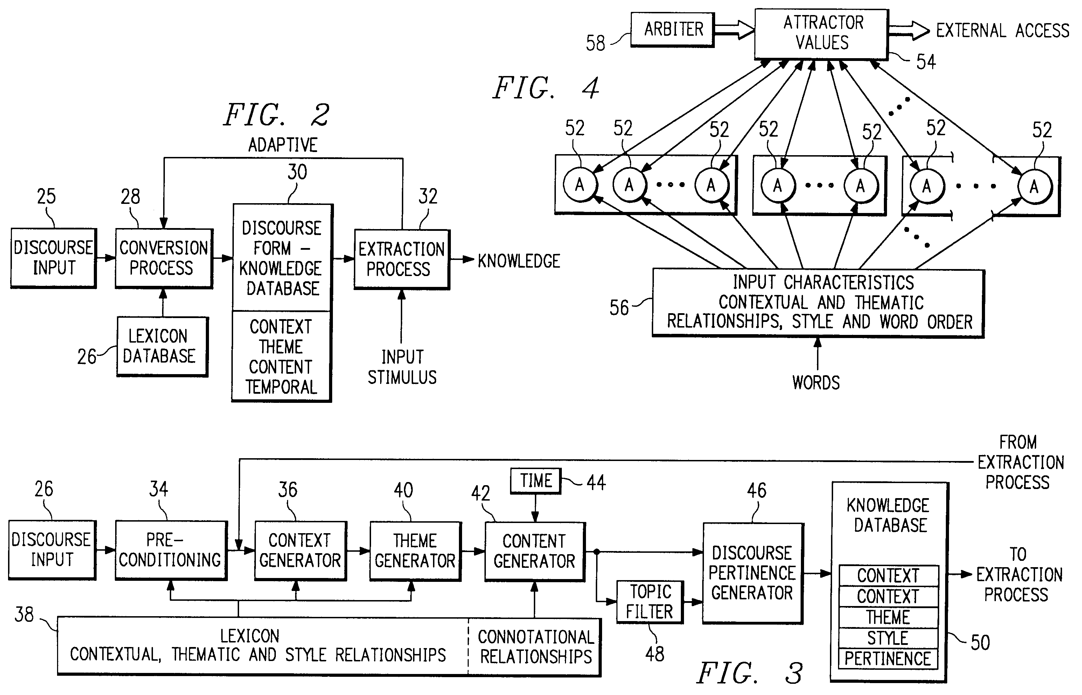

Referring now to FIGURE 2, there is illustrated a block diagram of the discourse process of the present invention utilized in a language. For simplicity purposes, the description hereinbelow will be restricted to the English language primarily with textual input. However, it should be understood that any language or any type of discourse can be accommodated by the discourse processor of the present invention. A discourse input is provided in a box 25. Typically, the discourse is discriminated into words, the lowest level of the English language that is not capable of being further divisible without losing meaning. The individual words and their sequence are then input to a box 28, representing a conversion process. The conversion process utilizes two inputs, the words output from the discourse input block 25 and also the individual characteristics or attributes of those words which are contained in a lexicon database 26. The lexicon 26 stores and represents words by upwards of a thousand characteristics. These characteristics represent the contextual aspects, the thematic aspects, the connotational aspects and stylistic aspects of a given word. These exist by the fact that the word exists and it is the various characteristics of the word that have been imparted to that word over the years that has been realized in the lexicon 26.

The conversion process in block 28 is operable to generate the form of the discourse, this form containing the context of the constituents of the discourse, the theme that runs throughout the discourse and the content of the discourse. This does not in and of itself represent the knowledge but, rather, it represents merely the form. In addition, the discourse form has a temporal aspect to it; that is, the discourse form changes as a function of time and use.

In order to utilize the discourse form which is represented as a knowledge database 30, it is necessary to extract the form of the discourse. This is represented by an extraction process block 32. The extraction process block 32 operates in response to an input stimulus or a query. Typically, data is input to the knowledge database 30 to perform this extraction, this information providing another input to the conversion process block 28. This makes the system adaptive, and allows the knowledge database 30 or the form of the discourse to change or to be updated as a result of this extraction of knowledge. This is an important part in the interpretation of discourse in that discourse is something that changes. For example, if a sentence existed in the discourse "There are four tanks.", this would only impart meaning from the sentence level that there were in fact four tanks. However, the meaning of that sentence is somewhat ambiguous in that one does not know what it relates to. If, for example, a question had preceded that sentence that queried "How many tanks do we have?", we would know that the first sentence related to the fact that "we" had four tanks. However, if the previous question had been "How many tanks does the enemy have?", then one would know that the first sentence meant that the "enemy" had four tanks. Therefore, the sentence in isolation does not convey a sufficient amount of information as to its relationship in the discourse which would provide real knowledge as to the full meaning of that sentence.

Knowledge Database

Referring now to FIGURE 3, there is illustrated a block diagram of the portion of the discourse processor of FIGURE 2 that is involved with generating the discourse form for the knowledge database in block 30. In general, the knowledge database is the form of the discourse containing the content, the connotation, the context, the theme, the style and the discourse pertinence. The knowledge database in and of itself does not impart knowledge. As described above, it is extraction of this data that represents knowledge, as represented by the extraction process 32. The discourse input must first be preconditioned and put into a form that can be processed. Typically, this is a pre-parsing routine which is involved with sentence recognition, knowledge as to where the document begins and ends, some aspects of inflection, spell checking and segmentation into paragraphs. This is with respect primarily to textual input. This preconditioning is represented by a block 34.

Once preconditioned, the context of each of the sentences is determined by a context generator block 36. The context generator receives as its input the output of the preconditioning block 34 and also has access to a lexicon 38 which contains the contextual, thematic and stylistic relationships of words. It is with this information that the context can be determined in the process embodied in the block 36.

After the context of the sentence 36 has been determined, the theme of a given sentence is then determined. This is represented by a theme generator block 40. The theme, as will be described hereinbelow, defines which words are of strategic importance in a given sentence. This is compared to the context which basically defines how the elements or words work together.

After the theme has been determined, it is combined with the context, and then the content of the discourse, as determined by a content generator block 42. In determining the content of the knowledge database, the connotations of all or select words in a sentence need to be determined. The connotations of all the words are stored in association with the words in the lexicon 38 as connotational relationships. Each word in the English language has connotations which are shades of meaning. For example, in the sentence "My will is strong.", the word "will" could have a number of different meanings or connotations. In a legal environment, the word might mean a legal document. Alternatively, in a psychological environment, it could relate to some aspect of the mind in choosing or deciding. In any given sentence, a word can have only one connotation. In the box 42, this connotation is given to the word, and the sentence in conjunction with the other sentences in the knowledge database impart content to the sentence. The content has a temporal aspect to it, as will be described in more detail hereinbelow. Therefore, time is also an input to the content generator 42, as represented by block 44.

Once the content of a sentence is determined, its pertinence in the discourse must be determined. This process is represented by a discourse pertinence generator 46. The discourse pertinence generator 46 operates in conjunction with the description relative to FIGURE 1 above. By examining the topics which are determined by the content generator 36, decisions can be made about the overall dominance by any one topic. Each topic represents a commonality or developmental item. By looking at only topics, one can classify sentences that have common topics and by relating topics to one another, a paragraph break can be determined, and by relating a commonality between paragraphs, a section can be determined and this can continue up to the chapter level and then to the highest level, which is the document level. The output of the discourse pertinence generator 46 represents the knowledge database which contains the content, the context, the theme, the style and the pertinence of a given discourse. To glean knowledge from the database, it is only necessary to extract it, manipulate it, etc.

Chaos Loop

Referring now to FIGURE 4, there is illustrated a block diagram of a parallel processing scheme which represents how the context generator 36 and the theme generator 40 output the contextual, thematic and stylistic form of a given sentence. It should be noted that this context, theme and style exist on a sentence level. Therefore, the input to the content generator 42 represents the form of the sentence. As will be described hereinbelow, this form is termed a "Chaos Loop" which is a word that relates to the chaotic nature of language and the fact that the form of a given sentence represents a non-randomness within chaos.

In accordance with one aspect of the present invention, the words are input to the context generator 36 or the theme generator 40 and then processed by applying linguistic principles thereto. However, realizing that language is non-linear and chaotic in nature, no attempt has been made to apply at any one distinct level broad ranging rules to narrow down a list of possibilities and then proceed to lower levels with more decisions based in that lower level to finally yield an answer. This would be a hierarchical tree structure which does not lend itself to analyzing anything in a chaotic environment. Rather, the approach to the present invention has been to partition the linguistic principles into microscopic truths which can render only very small decisions about the contextual structure of a sentence or the thematic relationships of the words in a sentence. This allows one to deal with the linguistic principles on a minuscule basis independent of all the other principles. These are represented by process blocks 52 which are termed "attractors". Each of the attractors 52 is operable to execute a microscopic process which involves an isolated set of linguistic principles. However, the overall effect by any one attractor 52 on determining the contextual makeup of a given sentence or the relationship of words within a sentence is microscopic. In FIGURE 4, the attractors 52 are represented as operating in parallel. In the preferred embodiment, however, the attractors 52 operate in a serial processing manner for convenience purposes. However, the concept of the way in which the attractors operate can be facilitated in a parallel processing mode, since each attractor 52 is designed to be an independent processing block.

In order to relate the processes carried out by each of the attractors 52, a common block 54 is provided which represents the attractor values. These values provide a means by which each of the attractors 52 can communicate with the other attractors 52 in the system. However, none of the attractors 52 know of the presence of the other attractors. It only knows that there are one or more values that it affects. Its effect upon these values may be strong or it may be weak. Each of the attractors 52 can examine and set certain attractor values.

The attractor values in block 54 have a general meaning with respect to concepts such as the theme and context of a sentence, i.e., whether a word is a noun, a preposition, included in a phrase, etc. Each word in a sentence has a set of attractor values associated therewith. Further, each attractor 52 in its processing scheme operates relative to a given word but can look at attractor values for other words. Therefore, the attractor value block 54 is multi-dimensional; that is, it extends to all other words in a sentence. Each of the attractor values 52 also has available to it all of the contextual characteristics that are stored in the lexicon 38, as represented by a block 56. The words are input to the block 56 such that during processing, the attractors 52 know the word they are operating on and the order of that word in the sentence. Although a serial processing scheme is utilized, the parallel processing scheme could be expanded such that there exists a complete set of attractors 52 for each word in a sentence. Therefore, each word in a sentence would be independently input to one set of attractors 52 and would effect the attractor values in attractor value block 54 for that given word. However, the embodiment of the present invention, as will be described hereinbelow, utilizes a structure whereby the words are serially processed through the various attractors 52.

During processing, each of the attractors 52 receives information regarding other attractor values which are indigenous to its dedicated process. The object of each of the attractors 52 is set to a certain attractor value or certain attractor values. However, it may be that the attractor values are set such that the input to the given attractor 52 never results in the setting of an attractor, i.e., the process exits before it reaches the object of its process. Each of the attractors 52 is continually running and will always attempt to achieve its object of functionality--normally to set an attractor value. There will be a point in time for a given state of the attractor values in block 54 wherein no further change to attractor values occurs. This indicates when the process has stabilized. At this point, a representation is provided by the attractor values in the attractor value block 54 for a given sentence. This sentence will always result in the same set of attractor values when run through the process for a given set of attractors 52. This represents a stable chaotic representation of the context of the English sentence.

There are situations when two or more attractors 52 cannot make a decision as to what a given attractor value should be. For example, the attractor value representing the Simple Subject may, for a given sentence, be flip-flopped back and forth as a result of two attractors 52 operating on that attractor value. This is a situation where one word would be interpreted by one attractor 52 as a Simple Subject and by another attractor 52 as not being a Simple Subject. However, it should be understood that these two attractors at this point are the result of all of the other attractors coming to some sort of stability and having made their independent, isolated decisions such that they no longer affect this attractor value.

When the process cannot settle as the result of two or more attractors 52 being in contention over one attractor value, an arbiter process 58 is provided. The arbiter process 58 essentially examines the attractor values and determines that two or more of the attractors cannot decide as to the status of a given attractor value. The arbiter 58 sets a flag, which is also examined by the contrasting attractors 52. When the two attractors 52 that are in contention over a single attractor value see this flag, their operation is affected. This will alter the decision made by both of the attractors 52 that are in contention over a single attractor value, and one will dominate and set the attractor value one way or the other.

The particular linguistic principles that are carried out by any one given attractor 52 have been determined over a number of years in an iterative manner. It is merely important to note that each attractor 52 represents a microscopic set of linguistic principles that exist in language. There are no major decisions or different levels of decisions that are carried out by any one of the attractors 52. Rather, each of the attractors 52 operates independently from the other attractors 52.

When a new attractor 52 is added to the system, it is typically added to apply one more set of linguistic rules in a very microscopic manner. The attractor is not designed specifically to have any large effect on a given attractor value but, rather, merely to formulate one small aspect of the linguistic principles governing some aspect of context, theme or style. After a new attractor is added, the system must be tested to determine that this attractor does not detrimentally affect the operation of the system. The attractor may be added to provide a beneficial effect on one given arrangement of words. This is an intuitive process that may take a number of attractors before the correct result is achieved, assuming that no detrimental effects result. The actual effects on the processing of other attractors 52 is unknown, as this cannot be determined. Therefore, it can be seen that the partitioning of the complexity of the linguistic rules allows the system to be expanded in small chunks without exact knowledge as to how any given attractor 52 affects the overall set of attractor values 54 for a given sentence. The attractors 52 each represent a small process which applies a very small portion of the overall body of linguistic rules that define how words are to be interpreted in a sentence.

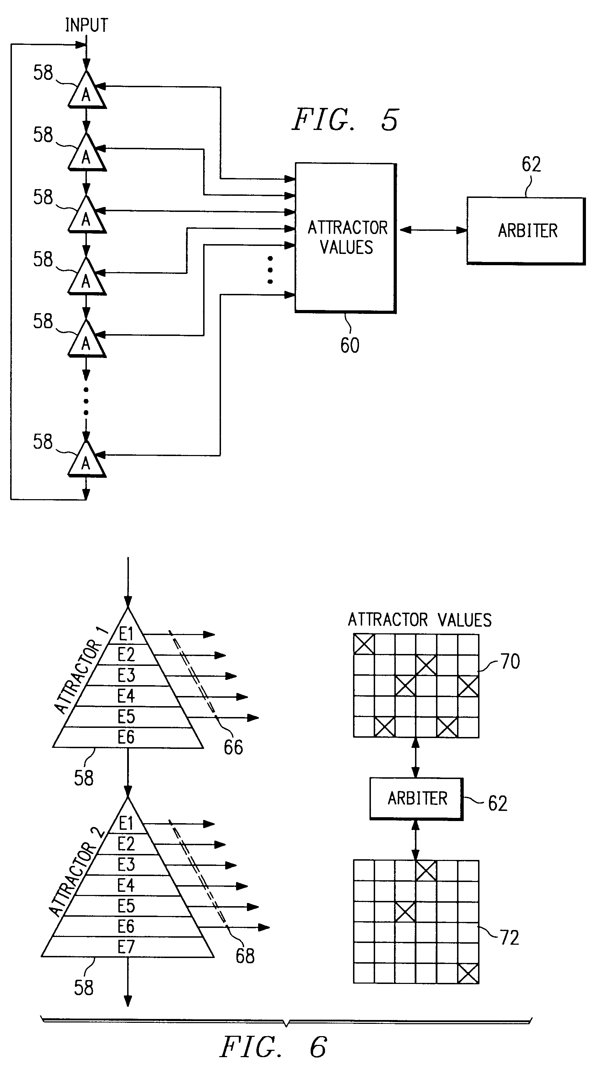

Referring now to FIGURE 5, there is illustrated the preferred embodiment for processing through each of the attractors 52. In FIGURE 4, the attractors 52 were illustrated as being processed in parallel. In the preferred embodiment, however, the attractors are executed in a serial manner is effected. Each of the attractors 52 is represented in FIGURE 5 in a triangular shape, the significance of which will be described hereinbelow. There are an extremely large number of attractors 52 which are utilized for the process illustrated in FIGURE 5. As will be described hereinbelow, one set of attractors is utilized to generate the form of the context, one set for the form of the theme, and one set for the form of the style.

Each of the attractors 58 has the outputs thereof interfaced with the input of the next one of the attractors 58 in the series. In addition, each of the attractors 58 is interfaced with an attractor value block 60, similar to the attractor value block 54 in FIGURE 4. An arbiter 62 is provided, which is similar to the arbiter 58 in FIGURE 4. The output of the last of the attractors 58 is connected back to the input thereof. Although the attractors 58 are illustrated as being completely in series with only one input and one output, it should be understood that the attractors 58 can output such that it will jump to any other attractor 58 since, on a very isolated level, one attractor's process can relate to another attractor 58. However, from an overall standpoint the attractors 58 are isolated and merely operating in a purely sequential manner.

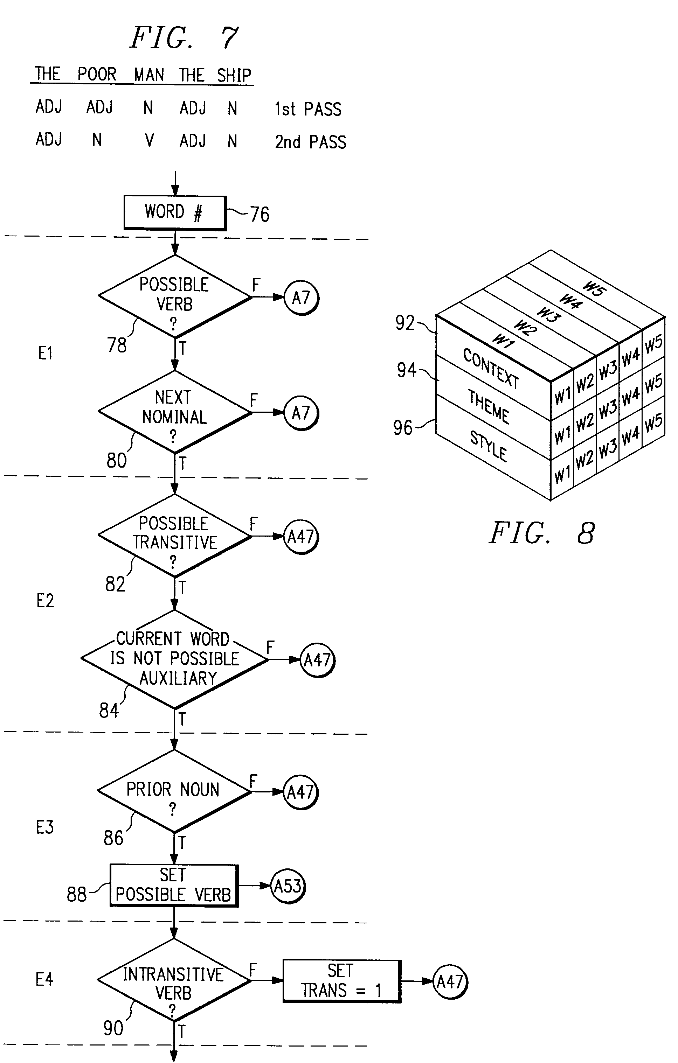

Referring now to FIGURE 6, there is illustrated a more detailed view of the structure of two of the attractors 58, one labeled attractor 1 and one labeled attractor 2. The attractors are triangular shaped with the input going into the apex and the output represented by the base portion. The attractors are comprised of a plurality of elements e1-en, where n can be any value. The elements represent the process steps that are carried out by the attractors 58. The attractors 58 are set up such that there is a central object of functionality which is represented by the lowest element, for example, element e6 in attractor 1 and element e7 in attractor 2.

If the object of the attractor 58 was to determine whether a word that was input thereto could be a noun or a verb, the attractor might go through a number of process steps or elements, the elements representing or based upon a group of linguistic principles. When a word enters any one of the given attractors 58, it enters at the top and is processed by each of the elements therein in a sequential manner. When the processor reaches a particular point in the attractor's process that results in a non-truth, the process will provide an output into the next one of the attractors 58. These are represented by output lines 66 for an attractor 1 and output lines 68 for an attractor 2. However, it should be understood that it is possible to skip a number of attractors in this sequence for efficiency purposes. To go through the adjacent attractors may be inefficient as those attractors logically may have nothing to do with the decision making process, although they do have some effect on it.

Referring further to FIGURE 6, each of the attractors has represented adjacent thereto a diagram of the attractor values. For simplicity purposes, the attractor values are illustrated in a grid with an X marked through the attractor values that are affected by the particular one of the attractors 58. A grid 70 is provided adjacent to attractor 1 and a grid 72 is provided adjacent to attractor 2. However, it should be understood that each of the grids 70 and 72 represent the same attractor values with different ones of the attractor values marked as being associated with the adjacent attractor 58.

The marked through attractor values in the grids 70 and 72 represent the attractors that are either set by the adjacent attractor 58 or act as inputs to the adjacent attractor 58. Each of the attractors 58 provides an isolated process representing a predetermined group of linguistic principles for a given language. These linguistic principles represent only a minute portion of the overall set of linguistic principles that represent the given language. It is all of the attractors when operated as a whole that represent the overall given language. Further, one attractor being adjacent to another attractor does not necessitate that the linguistic principles addressed by each of the adjacent attractors are even remotely related.

Referring now to FIGURE 7, there is illustrated a an example of how an attractor would be set up and how it would affect the attractor values. For purposes of the illustration in FIGURE 7, the attractor is represented by at least four attractor elements e1-e4. The example that is processed is the sentence "The poor man the ship." In analyzing this sentence, each of the words must be processed through the attractors. For each pass, the attractor values are adjusted and then the sentence again passed through the attractors. This continues until the attractor values no longer change. This is the representation of the form of the sentence in the attractor values themselves.

As represented in FIGURE 7, on the first pass the first word is designated as an adjective, the second word is designated as an adjective, the third word is designated a noun, the fourth word is designated an adjective and the fifth word is designated a noun. In the second pass, the second word is changed from an adjective to a noun, the third word is changed from a noun to a verb, etc. Although this may not be correct, it will finally settle down to the correct grammatical structure in accordance with the linguistic principles embodiment in the entire set of attractors. As a word enters the attractor, as illustrated by a word block 76, it enters the first element e1. In this element, the first test is to test the word as being a possible verb. This is represented by a block 78. Each of the blocks 78 represent a small processor program in and of itself. This program accesses the lexicon when given a word and determines from the characteristics associated with that word whether certain flags associated with the word are set that indicate a "possible verb". Therefore, the block 78 basically tests certain flags in a given word. As described above, there are large numbers of possible characteristics associated with a word. There may be up to 800 flags to test for. However, the program represented by the block 78 only tests certain flags that would give the word verb stature. If this test is false, the attractor would output to another attractor labeled a7. If the word did indicate that it was a possible verb, the next step would be to test for the "next nominal", as represented by a block 80. If this tested false, the process would exit the attractor and go to the attractor a7.

If the test in the block 80 were true, then the attractor would flow to the next element e2 to a block 82 to determine whether the word was a "possible transitive". If not, the process exits and goes to an attractor labeled a47 and, if it tests true, the process flows to a block 84 to determine whether the current word is not possibly an "auxiliary". If this tests false, the process exits and goes to the attractor a47 and, if it tests true, the process flows to the next element e3.

The element e3 in a first block 86 tests whether there was a "prior noun". In this block 86, a process is indicated where another word in the sentence is tested. As described above with reference to FIGURE 4, each word has a set of attractor values associated therewith and each attractor can look to the attractor values of another previous word. If the prior word is not a noun, the process will exit and go to the attractor a47 and, if it is a noun, the process flows to a block 88 wherein the attractor value for a "possible verb" is set. The process then flows to the next element e4. Element e4 has a block 90 contained therein that tests for an "intransitive verb". If the word is not an "intransitive verb", the process sets a transitive attractor value and exits to attractor a47 and, if it is an intransitive verb, the process flows to the next element. This continues until the lowest level of the attractor is reached.

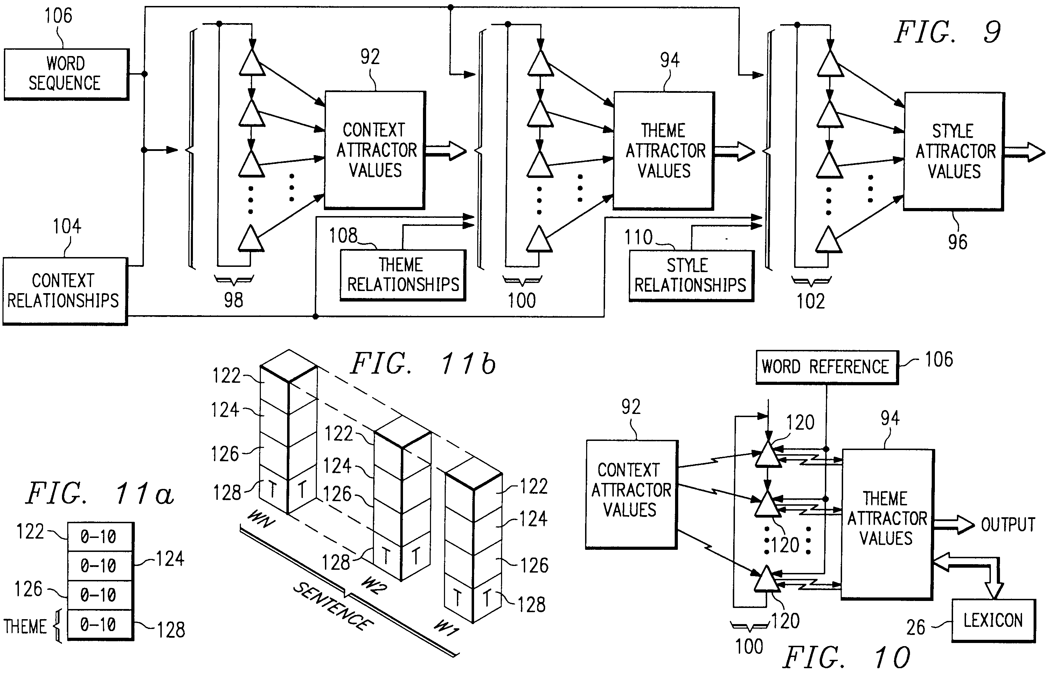

Referring now to FIGURE 8, there is illustrated a conceptual view of how the attractor values would represent the entire form of all words with respect to context, theme and style. The attractor values, as described above, represent the form of the word which can be accessed from outside the processor, or internally by the processor. Each word in a sentence, with which the chaos loop is associated, has a separate set of attractor values for context, theme and style associated therewith. A first layer 92 is provided for the context, which layer 92 has associated therewith five sections labeled w1, w2, w3, w4 and w5, representative of a five word sentence. However, this could be deeper depending upon the number of words in a given sentence. A second layer 94 is provided for theme, which also has five sections labeled w1-w5. A third layer 96 is provided for style, also having five sections w1-w5. Each of the words therefore has a specific set of attractor values associated therewith, but are multi-dimensional in that the determination as to any attractor value for any given word is a function of the process performed by the attractor values and also of the contextual, thematic and stylistic relationships

10

of the word the sentence. As will be described hereinbelow, this chaos loop or form as illustrated in FIGURE 8 is further built up to provide the overall form of the sentence with respect to such various concepts as connotation and content. The attractor values have been given mnemonic representations which do not necessarily correspond to the literal meaning of the mnemonic, but rather, each attractor value takes on meaning only when interpreted in view of all of the attractor values.

Referring now to FIGURE 9, there is illustrated a diagrammatic view of how the process flows when determining first the context of the attractor values, second the thematic attractor values and third the stylistic attractor values. Each of the context attractor values, the thematic attractor values and the stylistic attractor values has a specific set of attractors associated therewith. The context attractor values in layer 92 have a set of attractors 98 associated therewith, and the thematic attractor values in layer 94 have a specific set of attractors 100 associated therewith, and the stylistic attractor values in layer 96 have a specific set of attractors 102 associated therewith. The attractors 98 that determine the context attractor values receive as an input the contextual relationships that are stored in the lexicon, as represented by a block 104, and the word sequence, as represented by a block 106. The thematic attractors 100, however, not only receive the thematic relationships, as indicated by block 108, and the word sequence, but they also receive as an input the context attractor values in layer 92. In a similar manner, the stylistic attractors 102 receive as an input the stylistic relationships 110, the word sequence and the thematic attractor values 94. Note that each successive level receives the prior lexicon information as well.

As described above, for efficiency purposes the attractor values may be grouped together such that the attractors contained in a given group deal primarily with one aspect of the linguistic principles. For example, some attractors are grouped together with respect to the parts of speech and also with respect to clause constituents. This is not to say that the attractors in one group or the other deal exclusively with that subject but, rather, that the attractor values associated with, for example, the parts of speech, are affected by the parts of speech analysis group more so than the attractors in the other groupings. This will be described in more detail hereinbelow.

In the preferred embodiment, there are upwards of fifty attractor values, of which eight are designated as being the parts of speech. Although each word in a given sentence can have different possible parts of speech associated therewith, only one part of speech can be associated with any given word once it is in the context of a sentence. It is therefore an object of the attractors to impart this context to each word in the sentence. As an example of the operation of the system, the sentence "After the man had finished reading the book, he put it on the table." is processed by the attractors. Initially, as a result of the preconditioning as illustrated in the block 34, the words have been pre-parsed such that it is known where the sentence begins and ends; it also organizes the words with respect to their importance in the sentence such that they can be processed in accordance with a different order than the order in which they occurred. When this sentence has been processed by the attractors, the attractor values as output from the system are represented in TABLES 1, 2, 3 and 4. TABLE 1 is related to the parts of speech, TABLE 2 is related to the various attractors that fired to provide an indication as to which attractor determined a given attractor value, TABLE 3 relates to the attractor values for the clause constituents, and TABLE 4 relates to the intermediate level.

## TABLE 1

| | BP | AP | OG OR | PR OR | Original POS CPPVAAPC NPNBVJRJ | Actual POS CPPVAAPC NPNBVJRJ | N N | POS NM TR | PGI PRF |
|---|---|---|---|---|---|---|---|---|---|
| After | | | 1 | 8 | ....*.** | .......* | . | 1 | ... |
| the | | | 2 | 9 | .....*.. | .....*.. | . | 0 | ... |
| man | | | 3 | 4 | *....... | *....... | * | 0 | ... |
| had | | | 4 | 5 | ...*.... | ...*.... | . | 0 | ... |
| finished | | | 5 | 2 | ...*.... | ...*.... | . | 0 | ... |
| sending | | | 6 | 1 | ...*.... | *....... | * | 0 | ... |
| the | | | 7 | 10 | .....*.. | .....*.. | . | 0 | ... |
| book | , | , | 8 | 6 | *....... | *....... | * | 0 | ... |
| he | | | 9 | 11 | ..*..... | ..*..... | * | 0 | ... |
| put | | | 10 | 3 | *..*.... | ...*.... | . | 0 | ... |
| it | | | 11 | 12 | ..*..... | ..*..... | * | 0 | ... |
| on | | | 12 | 13 | ....*.*. | ......*. | . | 0 | ... |
| the | | | 13 | 14 | .....*.. | .....*.. | . | 0 | ... |
| table | . | . | 14 | 7 | *....... | *....... | * | 0 | ... |

**TABLE 2**

## Parts of Speech

| | Rule | Rule | Rule | Rule | Rule | Rule | Rule |
|---|---|---|---|---|---|---|---|
| After | 149 | 57 | 346 | 0 | 0 | 0 | 0 |
| the | 341 | 0 | 0 | 0 | 0 | 0 | 0 |
| man | 549 | 597 | 45 | 74 | 554 | 413 | 0 |
| had | 48 | 0 | 0 | 0 | 0 | 0 | 0 |
| finished | 0 | 0 | 0 | 0 | 0 | 0 | 0 |
| reading | 492 | 870 | 287 | 0 | 0 | 0 | 0 |
| the | 0 | 0 | 0 | 0 | 0 | 0 | 0 |
| book | 549 | 597 | 116 | 0 | 0 | 0 | 0 |
| he | 336 | 0 | 0 | 0 | 0 | 0 | 0 |
| put | 244 | 216 | 494 | 842 | 504 | 510 | 29 |
| it | 0 | 0 | 0 | 0 | 0 | 0 | 0 |
| in | 57 | 0 | 0 | 0 | 0 | 0 | 0 |
| the | 341 | 0 | 0 | 0 | 0 | 0 | 0 |
| table | 225 | 597 | 42 | 74 | 0 | 0 | 0 |

## TABLE 3

### CLAUSE CONSTITUENTS

| | Flags | | | | | | | Lev1 | | Lev2 | | Lev3 | | Lev4 | | Lev5 | |
|---|---|---|---|---|---|---|---|---|---|---|---|---|---|---|---|---|---|
| | OR OD | PR OD | LG BK | | RMD MMK | M C | Sb Cl | Tp Cl | Nm Cl | Tp Cl | Nm Cl | Tp Cl | Nm Cl | Tp Cl | Nm Cl | Tp Cl | Nm Cl |
| After | 1 | 8 | 1 | . | 0 | 1 | 1 | AV | 2 | -- | 0 | -- | 0 | -- | 0 | -- | 0 |
| the | 2 | 9 | 1 | . | 0 | 1 | 1 | AV | 2 | -- | 0 | -- | 0 | -- | 0 | -- | 0 |
| man | 3 | 4 | 1 | . | 0 | 1 | 1 | AV | 2 | -- | 0 | -- | 0 | -- | 0 | -- | 0 |
| had | 4 | 5 | 1 | . | 0 | 1 | 1 | AV | 2 | -- | 0 | -- | 0 | -- | 0 | -- | 0 |
| finished | 5 | 2 | 1 | . | 0 | 1 | 1 | AV | 2 | -- | 0 | -- | 0 | -- | 0 | -- | 0 |
| reading | 6 | 1 | 1 | . | 0 | 1 | 2 | AV | 2 | NC | 3 | -- | 0 | -- | 0 | -- | 0 |
| the | 7 | 10 | 1 | . | 0 | 1 | 2 | AV | 2 | NC | 3 | -- | 0 | -- | 0 | -- | 0 |
| book | 8 | 6 | 1 | . | 0 | 1 | 2 | AV | 2 | NC | 3 | -- | 0 | -- | 0 | -- | 0 |
| he | 9 | 11 | 4 | . | 0 | 1 | 0 | -- | 0 | -- | 0 | -- | 0 | -- | 0 | -- | 0 |
| put | 10 | 3 | 4 | . | 0 | 1 | 0 | -- | 0 | -- | 0 | -- | 0 | -- | 0 | -- | 0 |
| it | 11 | 12 | 4 | . | 0 | 1 | 0 | -- | 0 | -- | 0 | -- | 0 | -- | 0 | -- | 0 |
| in | 12 | 13 | 4 | . | 0 | 1 | 0 | -- | 0 | -- | 0 | -- | 0 | -- | 0 | -- | 0 |
| the | 13 | 14 | 4 | . | 0 | 1 | 0 | -- | 0 | -- | 0 | -- | 0 | -- | 0 | -- | 0 |
| table | 14 | 7 | 4 | . | 0 | 1 | 0 | -- | 0 | -- | 0 | -- | 0 | -- | 0 | -- | 0 |

## TABLE 4

### Intermediate Level

| Orig Word | OR OD | PR OD | LG BK | SB CS SS | PD PV DP | TH TH TH | Case NONNNNNOOOP MJADSPPDPAP | R L | Prp PAA PVJ | Object DISOON OOCCBH | NN PR PR |
|---|---|---|---|---|---|---|---|---|---|---|---|
| after | 1 | 8 | 1 | *. | .. | 0 | ............ | . | .0. | ....00 | 0 |
| the | 2 | 9 | 1 | *. | .. | 3 | ............ | . | 0.. | ....00 | 3 |
| man | 3 | 4 | 1 | ** | .. | 4 | *...*....... | . | 0.. | ....00 | 3 |
| had | 4 | 5 | 1 | .. | ** | 0 | ............ | . | 0.. | ....00 | 0 |
| finished | 5 | 2 | 1 | .. | ** | 20 | ............ | . | 0.. | ....00 | 0 |
| reading | 6 | 1 | 1 | .. | *. | 30 | .*.......... | . | 0.. | .*..11 | 2 |
| the | 7 | 10 | 1 | .. | *. | 0 | ............ | . | 0.. | *...20 | 1 |
| book | 8 | 6 | 1 | .. | *. | 30 | .*.......... | . | 0.. | *...22 | 1 |
| he | 9 | 11 | 4 | ** | .. | 7 | *...*....... | . | 0.. | ....00 | 3 |
| put | 10 | 3 | 4 | .. | ** | 20 | ............ | . | 0.. | ....00 | 0 |
| it | 11 | 12 | 4 | .. | *. | 5 | .*.......... | . | 0.. | *...11 | 2 |
| on | 12 | 13 | 4 | .. | *. | 0 | ............ | . | 1.* | ....00 | 0 |
| the | 13 | 14 | 4 | .. | *. | 0 | ............ | . | 1.* | ....00 | 1 |
| table | 14 | 7 | 4 | .. | *. | 0 | .*......*... | . | 1.* | ....00 | 1 |

In TABLE 1, it can be seen that the original order OG OR shows the actual sequence or order of the sentence. The parsed order PAR OR, however, is different. It can be seen that the word "reading" was the first word to be processed, the word "finished" was the second word to be processed, and the word "put" was the third word to be processed. This organization is generally related to the importance of the words in a sentence, as will be described hereinbelow. The base punctuation B P shows that a comma occurred after "book", and a period occurred after "table". Essentially, the punctuation has been stripped from the sentence. The actual punctuation A P is identical.

The various parts of speech that are associated with words are defined as follows:

| CN | Common Noun |
|----|-------------|
| PP | Proper noun |
| PN | Pronoun |
| VB | Verb |
| AV | Adverb |
| AJ | Adjective |
| PR | Preposition |
| CJ | Conjunction |

Each word has associated therewith in the column labeled "Original POS" the available parts of speech in the lexicon. It can be seen, for example, that the word "reading" could only be a verb, the word "after" could be an adverb, pronoun, or conjunction and the word "put" could be a common noun or verb. In the column labeled "Actual POS", the attractor values representing the actual part of speech for each of the words is shown. A column labeled "NN" indicates that the word is a noun. For example, this would include "man", "reading", "book", "he", "it" and "table". It would be a category that basically covers three flags: common noun, proper noun and pronoun. It is interesting to note that although the original parts of speech for "reading" indicated only a verb status, it was determined that it actually had a noun nature to it.

In the last column there are three sections: PP, GR and IF, representing participle, gerund and infinitive, respectively. It can be seen that "reading" is designated as a gerund. Therefore, "reading" is now called a noun and a participle when it was originally defined as a verb. It is not really a noun but a verb functioning in its participle form, not as a lexical verb.

It can be seen that the attractor values associated with TABLE 1 represent only a few of the total attractor values. In TABLE 2, the actual attractors, which have individual numbers associated therewith, are designated as to when they have been "fired" to indicate their use in setting the parts of speech for a particular word. For example, the word "after" was termed as a conjunction. The attractors 149, 57 and 346 in combination set the attractor value to a conjunction for that word. The output of these attractor values merely provides a way by which the attractors that finally resulted from the word "after" being termed a conjunction can be examined at a higher level of analysis in the system. The values in TABLE 2 represent the attractors which were fully fired, i.e., they reach their objective, and set the respective attractor values for the associated word. This, as described above, is a function of how the attractor was initially set up. Although the function carried out by that attractor may be very simple, it could also be extremely complex.

TABLE 1 is generally related to a first phase of the attractors or grouping of attractors that is generally concerned with the initial parts of speech. A second phase of attractors is provided that is more concerned with the structure of the sentence and a third phase is provided that is more concerned with the clause level of the sentence. Therefore, the second and third phases are represented by TABLES 3 and 4. In TABLE 3, there is a column labeled "Flags", which has six columns associated therewith; two of which are the original and parsing order, which were also included in TABLE 1. There is also a subcolumn labeled "LG BK" which represents the Logic Break. Anytime the number in the Logic Break column changes, it indicates a structural alteration in the sentence where one could expect something such as a phrase or clause to begin or end. For example, in the sentence example of TABLES 1-4, the word after the comma and other elements could indicate that the preceding clause was an introductory adverbial clause, which occurred from the word "after" to the word "book". Thereafter, the main clause of the sentence started. The system analyzed the sentence and determined that something was happening at the Logic Break after the word "book". So, it shifted the number under the Logic Break column from a "1" to a "4", which simply means that there is something significant happening at this point. The Logic Break value may be determined by a group of five hundred or one thousand attractors which look at many different factors for a sentence as the sentence is processed. No single attractor makes a decision; it is an aggregate decision. There are a number of additional columns or flags, RM for relative marker and marker MDMK for modify marker. If, instead of saying "the man had finished reading the book", the sentence had stated "the man that I saw in the library had finished reading the book" the phrase "that I saw in the library" is a post modifying relative clause to "man". So, "that I saw in the library" would be marked with a relative marker, would point to the word "man", and would also have been shifted to another part of the sentence to remove it from the main subject-verb flow of the main clause.

The MC flag indicates the main clause, which can be seen as being set to a value of 1 for each word. Therefore, this sentence has only one main clause. If you had more than one main clause this would indicate whole sentences that were separated by, for example, semicolons. This would result in different numbers under the MC flag. The flag "SB CI" indicates a subordinate clause. This shows where the different levels of subordination exist in the sentence. In the present example, there was a first level of subordination which shifted from a "1" to a "2" at the word "reading" to indicate an embedded clause within the first subordinate clause. Then the value shifts to a "0" at the word "he", indicating the main clause of the sentence. It is possible in the present system to track five levels of subordinate clauses plus the main clause.

There are additional columns labeled LEV1 through LEV5 that indicate the different levels of subordination. In the column LEV1, there are two flags, the flag Tp CI, indicating the clause type and the flag Nm CI, indicating the clause number. For the first eight words, outside the subordinate clause, the label is AV, indicating an adverbial clause. So the portion of the sentence "after the man had finished reading the book" is labeled as an adverbial clause. In the column LEV2, the clause "reading the book" is determined as being a noun clause (NC), thus indicating that it is an embedded noun clause, since it is in a subsequent level within the adverbial clause. When analyzing the information in TABLE 3, the main clause can be determined from the fact that the flag MC has a "1" in it and the flag Sb CI has a "0" in it for the clause "he put it on the table".

In TABLE 4, labeled Intermediate Level, there is represented the phrase and clause structure as opposed to the type and format of the clauses. The first piece of information that is present is the subject under the column SB. It is broken into two areas, a complete subject, CS, and a simple subject, SS. The complete subject is organized by clause. The phrase "the man" is the complete subject of the clause and "man" is the simple subject of the clause. In the clause "he put it on the table", the word "he" is both the simple subject and the complete subject of the main clause.

The next column in TABLE 4 is labeled PD indicating the predicate. This is comprised of the predicate, PD, and the verb phrase, VP. The first clause "had finished reading the book" is indicated as the predicate and then the clause "had finished" is indicated as the verb phrase. The phrase "put it on the table" is a predicate and the word "put" is indicated as being a verb phrase. Therefore, by examining this portion of TABLE 4 for the example sentence, it can be determined that the word "put" is the verb phrase for the main clause and, therefore, it is the main action of the sentence. In the column labeled "Case", a series of flags is provided that determines what case a noun is working in--the nominative case or the objective case. The flag NM indicates the nominative, the flag OJ indicates objective. Therefore, the word "man" is in the nominative case and the word "he" is in the nominative case. Further, we know that the word "book" is in the objective case.

In a column labeled Prp, the existence of a preposition is indicated. There are three flags: PP, AV and AJ, indicating a prepositional phrase, an adverbial phrase and an adjectival phrase. The flag PP is set to either a "0" or a "1". The value of "1" for the words "on", "the" and "table" indicates that the phrase "on the table" is a prepositional phrase. If there were two prepositional phrases, the first prepositional phrase would have a "1" set, and the subsequent ones would have higher numbers. The words in the phrase "on the table" are also set in the AJ flag as indicating that it is functioning adjectivally. However, in a writing analysis mode, the system would interpret the phrase "on the table" as an adverbial phrase because the word "put" has an optional or obligatory adverbial flag set in the lexicon and, therefore, the system would know to interpret what was indicated as an adjectival prepositional phrase as really an adverbial prepositional phrase. Therefore, the flags would indicate that the phrase was an adjectival prepositional phrase, and this would only be so unless there is a verb in front of it somewhere in the main clause that has an optional adverbial flag set. This would indicate that the phrase was functioning adverbially.

The next set of flags is in a column labeled "Object". This indicates what type of objects are in the predicate. It takes the main clause object "it" in the phrase "he put it on the table" and terms this the direct object with the flag DO. The indirect object flag, IO, is set for the word "reading" and the flag SC, indicating subject complement, the flag OC, indicating object complement are not set. The flag OB is the object number which keeps track of all objects and the flag NH determines whether it is an object noun head.

The next column labeled "NN" is the noun phrase flag. Every noun phrase in the system is specifically marked. The phrase "the man" is a noun phrase in the clause "after the man had finished reading". It is marked with the value "3" for the third noun phrase in the sentence. The words in the phrase "the book" function together, and the words "he" and "reading" function separately.

In TABLE 4 there is also a column labeled TH, which indicates the theme attractor values. It can be seen that each word has a separate theme value associated therewith. This theme value will be described in more detail hereinbelow. However, this is the attractor value which represents the constituents of the theme--the topic, the focus and the action.

By way of example, each of the attractors associated with the attractor values 492, 870 and 287 will be described with reference to TABLE 2; it can be seen that the word "reading" was finally associated with these three attractors and the firing thereof. The attractor 492 is illustrated in TABLE 5 with a list of the instructions that represent the process flow.

17

## TABLE 5

```
mt wd_pres_participle,get_words,r6_14
vt _verb,get_words,r6_14
vt _verb,get_p2_word,r6_14a
mt wd_aux_pri_pas_verb,get_p2_word,r6_14a
tv p_adv,46_14a
mt wd_limiting_exclusive_adverb,get_p_word,r6_14a
; he is just feeling sick.
jmp r6_14
track get_words,492,1
mov go_flag,1
```

In the first decision, it tests the current word to see if it could possibly be a present participle. This is achieved by extracting from the lexicon the attributes or characteristics of the current word. It then goes to the next step to determine if this word could possibly function as a verb. If not, it would go to R614, which is what happens when the attractor does not process all the way to the bottom. In this example, R614 would be the next attractor.

If the word could possibly be a verb, the next process step indicates a step whereby the attractor looks at the second word prior to the current word to see if it is a verb. If it is not, it goes to R614a, which indicates a step of setting an attractor value. Therefore, once it gets this far, the attractor knows that it can set an attractor value at this point. Therefore, if the remaining tests in the attractor don't work then the attractor value will be set. But, if all the tests work, then the attractor value could not be set. This is how this particular attractor functions.

In the next step in the process, the second prior word to the current word is checked to see if it can be an auxiliary primary passive verb. If it can, it sets an attractor. Otherwise, it continues processing. In the next step, it checks the previous word to see if it is an adverb. If not, it sets the attractor flag. If the process continues, the next step indicates looking at the previous word and determining whether it is a limiting exclusivizer, a particular type of adverb. If so, it sets the attractor. If the attractor was not set in the last step, it merely goes out of the attractor or "jumps" out of the attractor to the attractor R614. In the present example described above, this is the next sequential attractor.

The sentence "He is just feeling sick." would result in processing all the way through the attractor without setting any attractor flags, with the current word being "feeling". The second previous word "is" is a verb,and also an auxiliary primary passive verb. The prior word is an adverb and it is also a limiting exclusiviser.

The attractor values 287 and 870 have a process thereof illustrated in TABLE 6 with attractor 870 embedded in attractor 287.

## TABLE 6

```
r6_172:
   rule 287, 183

   tv p_conj,r6_183_1
   vt _verb,get_p2_word,r6_183_1
   tv c_intransitive_verb,r6_183_1
   tvn n_word,r6_183_2
   jmp r6_151

r6_183_2:
   tv n_prep,46_183_1
   jmp r6_151

r6_183_1:
   mt wd_past_participle,get_words,r6_183_1a
   tvn n_article,r6_151

r6_183_1a:
   tv p_word,r6_183_1b
   mt wd_coord_pure_conj,get_p_word,r6_183_1b
   theq p_punc,null,r6_183_1b
   tv c_transitive_verb,r6_183_1b
   ; he started speaking and kept on for more than
   an hour
   jmp r6_151

r6_183_1b:
   tvn p_word, r6_183_1b1
   tv c_plural_verb,46_183_1b1
   ; run and tell him
   jmp r6_151

r6_183_1b1:
   tv n_adj,r6_183_1b2
   tvn c_internal_punc,r6_183_1b2
   test_determiner get_n_word,r6_183_1b2
   mt wd_past_participle,get_words,r6_183_1b2
   ; both passed their exams.
   jmp r6_151

r6_183_1b2:
   mt wd_pres_participle,get_words,r6_183_1c
   tv n_adj,r6_183_1c
   so f_c_noun
   so f_noun
   tack get_words,870,1
   jmp r6_183_1d
```

```
r6_183_1c:
  so f_adj
  so c_adj
  tack get_words,623,1

r6_183_1d:
  tv p_noun,r6_173
  tv n_adv,r6_173
  tbeq c_punc,null,46_173
  tbeq p_punc,null,r6_173
  jmp r6_151

r6_173:
  tv p_adv,r6_173a
  tbeq p_punc,null,r6_173a
  vt _verb,get_p2_word,r6_173a
  ; we are rather encouraged and content.
  mtn wd_intensifier_adverb,get_p_word,r6_173a

r6_173b:
  mtn wd_no_verb_mod_adverb,get_p_word,r6_173a
  mt wd_past_participle,get_words,r6_173a
  check_past_tense get_words,r6_173a
  ; alone sold more...
  ; but not "for frequently written files"
  so f_verb
  track get_words,624,1
  jmp r6_151

r6_173a:
  tv p_prn,r6_173c
  mt wd_personal_prn,get_p_word,r6_173c
  mt wd_nominative_case_prn,get_p_word,r6_173c
  mtn wd_objective_case_prn,get_p_word,r6_173c
  tvn p_internal_punc,r6_173c
  tv c_internal_punc,r6_173c
  ; he died, and he...
  jmp r6_151

r6_173c:
  z f_verb
  z c_verb
  track get_words,287,183
  tv f_adj,r6_173a1
  vs _pos_participle,get_words
  jmp r6_151

r6_173a1:
  vs _pos_gerund,get_words

r6_151:
  ret
```

In the first step, the attractor 287 tests to see if the prior word can be a conjunction. If it can, it continues. This is indicated by moving to a point within the attractor 287 labeled 183.1. In the next step, the prior two words are examined to determine if the current word can be a verb. If it continues, it goes to the point 183.1 within the attractor 287 and, if not, it goes to the next processing step. In the next processing step, it determines whether the current word can be intransitive. If not, it goes to the point 183.1, and if so, it proceeds to the next processing step. The next processing step tests to see if there is a next word to determine whether the current word is the last word in the sentence. If false, it goes to 183.1, and if not, this was the last word and the attractor jumps to an attractor labeled 151.

In the next process step, which is labeled 183.2, the attractor tests whether the next word can be a preposition. If so, it jumps to the attractor 151, and if false, it jumps to the line labeled 183.1, which is still within the attractor 287. The first step in the line 183.1 is to determine whether the current word can be a past participle. If not, it goes to the line 183.1a in the present attractor, and if so, it goes to the next processing step to determine if the next word is not an article. If it is not an article, it jumps to the attractor 151, and if it is an article, it goes to the next processing step to determine if there is a previous word, meaning that this is not the first word of a sentence. If false, it jumps to the line 183.1b in the attractor 287. If true, the process flows to the next step to determine if the prior word is a coordinating pure conjunction. If not, it goes to 183.1b, and if so, it goes to the next processing step to determine if there is any previous punctuation. If not, it jumps to line 183.1b. If there was previous punctuation, the next step indicates testing whether the current word is a transitive verb. If not, the process jumps to 183.1b, and if so, the process jumps out of the attractor 287 to the attractor 151.

At the process step 183.1b, the first test is to determine whether there was a previous word. If not, the attractor jumps to process step 183.1b, and if so, it jumps to the next process step to test whether the current word is a plural verb. If not, the process jumps to line 183.1b, and if so, the process goes to the next step which indicates jumping out of the attractor 287 to the attractor 151.

In the process step 183.1b, the first test is to determine whether the next word could be an adjective. If not, the process jumps to the process step 183.1b2, and if so, the process goes to the next step to determine if there is any current punctuation. If not, the process jumps to process step 183.1b2, and if so, the process determines whether the next word is a determiner. If not, the process jumps to process step 183.1b2. If so, then the process determines if the current word is a past participle. If not, the process jumps to step 183.1b2. If it met all the tests in 183.1b2, then it jumps out of the attractor 287 to the attractor 151.

In the step 183.1b2, the first test is to determine whether the current word is a present participle. If not, the process jumps to 183.1c, and if so, the process then determines if the next word can be an adjective. If not, the program will jump to another step 183.1c. This represents the place in the attractor wherein the attractor 870 has been completed and the common noun flag is set. Therefore, the attractor 870 is embedded within the attractor 287.

To continue on to the end of the attractor 287, after the attractor value was marked or set, the step 183.1c was jumped to. This immediately goes into the step whereby another attractor value number 623 well set the adjective flags for both the current adjective and the finished adjective, representing two attractor flags. The process then flows to the step 183.1d. In this process the previous word is tested to determine if it is a noun. If not, it goes to attractor 173. If it tests true as a noun, then the next step determines whether the next word is an adverb. If the next word is not an adverb, the process goes to attractor 173, and if the next word is an adverb, then the next step determines whether the current punctuation is a null, i.e. does not exist. If there is no current punctuation, the process goes to the attractor 173, and if the current punctuation was a null, the next step determines whether the previous punctuation is a null. If not, the process goes to the attractor 173, and if the previous punctuation is a null, the process jumps out to the attractor 151. This completes the process for the attractor 287.

In the step 173, the first process step determines if the previous word is an adverb; if not, it goes to the step 173, and if so, it next determines whether the previous punctuation is null. If this is false, the process goes to the step 173a and, if it is true, then the process determines if the word two words previous was a verb. If not, the process goes to 173b, and if it was a verb, the process determines whether the previous word was not an intensifying adverb. If this is false, the process goes to the step 173a, and if it is true, then the process goes to the next step 173b.

In the step 173b, the first step determines whether the previous word could not modify a verb. If this is false, the process goes to the step 173a, and if true, the process goes to the next step to determine if the current word is a past participle. If false, the process goes to the step 173a, and if true, the process then determines if the current word is a past tense verb. If this is false, the process goes to the step 173a, and if true, the attractor 624 is set on, which sets the verb attractor on.

The next step is the step 173a, which first tests if the previous word is a pronoun. If not, the process goes to the step 173b, if so, the process determines whether the previous word is a personal pronoun. If false, the process goes to the step 173c, and if true, the process determines whether the previous word is a nominative case pronoun. If false, the process goes to the step 173, and if true, the process then determines if the previous

21

word was not an objective case pronoun. If false, the process goes to the step 173c, and if true, it determines whether there was any punctuation on the previous word. If not, the process goes to the step 173c, and if true, the process then determines if there is some current internal punctuation on the current word. If not, the process goes to the step 173, and if true, the process determines if the current word is an intransitive verb. If not, the process goes to the step 173c and, if true, the process then jumps out of the attractor to the attractor 151.

In the step 173c, the attractor 287 is set "on" which sets "off" the attractor for the current and finished verb attractor. The next step is to test for a finished adjective on the current word, and if it was there, the possible participle flag is set "on", and the process jumps to the attractor 151. In the next step, step 173a1, the possible gerund flag is set "on". This is the end of the process for attractor 287.

The lexicon sores the attributes of each of the words in a given language. These are the definitional characteristics. A set of definitional characteristics is defined for all words as flags. Each word has predetermined ones of these flags set, the total number of these set flags defining the word in the lexicon. Representative ones of the glads are illustrated in TABLE 7, the flags being grouped as "Parts of Speech", "Phrases", "Nouns", "Verbs", "Adverbs", "Prepositions" and "Conjunctions", which groups are representative of a larger number of groups. There are over one thousand flags that can be set to define the definitional characteristics of a word, with only a few of the flags being set for any given word.

## TABLE 7

### DEFINITIONAL CHARACTERISTICS

| Parts of Speech | Noun | Phrases | Verbs |
|---|---|---|---|
| Common Noun | Singular | Archaic | Singular |
| Proper Noun | Plural | Obscene | Plural |
| Pronoun | Male | Cliche | First Person |
| Verb | Female | Trite | Stative |
| Adverb | | | Dynamic |
| Adjective | | | |
| Preposition | | | |
| Conjunction | | | |

| Adverbs | Prepositions | Conjunctions |
|---|---|---|
| Intensifier | Cause | Coordinating |
| Enumerative | Distinction | Subordinating |

Theme

In the theme layer 94, the theme of a sentence is determined. In accordance with the present invention, there are ten theme elements, each theme element having a different attractor value. In general, three primary theme elements are topic, focus and action. Topic is defined as the main element of the sentence that represents the major information bits of a sentence. The focus is the main event that has taken place in a sentence and the action is how the main event is acting on the topic. In general, a simple sentence would have the subject as a topic, the object as the focus and the verb as the action. However, in more complex sentences this can vary.

Referring now to FIGURE 10, there is illustrated a more detailed diagram view of the theme attractor values in layer 94 and their associated attractors 120. As described above, the context attractor values, the theme attractor values and the stylistic attractor values are all arrived at with groups of attractors associated with those particular attractor values. The attractors 120 are dedicated in operation to setting theme attractor values. In general, the theme attractors are generally groupings of tests for thematic elements. The actual test performed by all of the attractors is illustrated in APPENDIX A.

The theme attractors 120 are operable to set the theme attractor values in layer 94 of the chaos loop and also to examine these attractor values. The theme attractors 120 can also look at the status of the context attractor values. However, the theme attractors 120 are not allowed to set or in any way alter the context attractor values. In setting the theme attractor values, the theme attractors 120 not only utilize the values of the context attractor values for all the words in the sentence, but they also utilize thematic elements of each of the words in the lexicon 26. As described above, the thematic elements of the words are typically grouped together as the initial flags. The attractors 120 also receive the word order, indicated by block 106.

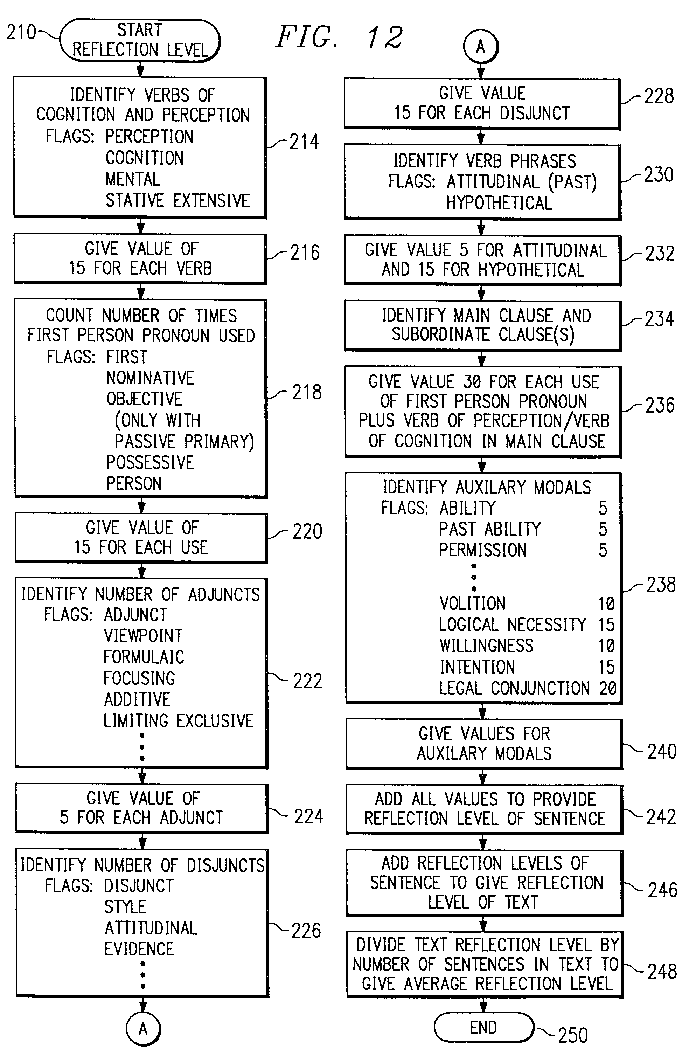

Referring now to FIGURE 11a, there is illustrated a diagram of the attractor values for the theme layer 94. In the present invention, four attractor values are utilized, which are illustrated by boxes 122, 124, 126 and 128. These four attractor values are accessible by any one of the attractors 120, depending upon the tests that are performed by that attractor 120. As described above, we do not necessarily know what test the other attractors 120 are performing or what effect they have on the particular attractor value associated with any given attractor. Rather, the attractor 120 merely looks at the attractor value and then performs its test. Each of the attractor values in boxes 122-128 can have from 0 to 10 different values, each value ranged between a value of 0 to 99. Only one of the attractor values, the attractor value in box 128, represents the actual thematic output of a given word. Other than the values of the box 128, the values of the boxes 122, 124 and 126 have little meaning outside the actual test performed by each of the attractors 120. The attractor values for the box 128 are as listed in TABLE 8.

## TABLE 8

| Number | Attractor Value | Description |
|--------|-----------------|-------------|
| 1 | 2 | Main Topic |
| 2 | 20 | Main Action |
| 3 | 30 | Main Focus |
| 4 | 1 | Adj. to 2 |
| 5 | 99 | Stop Item |
| 6 | 4 | Sub Clause Topic |
| 7 | 7 | Weak Main Topic |
| 8 | 3 | Adj. to 4 |
| 9 | 5 | Weak Focus |
| 10 | 0 | No Thematic Value |

Referring now to FIGURE 11b, there is illustrated a diagrammatic of the attractor values associated with the words w1 through wn. Each of the attractors 120 is operable to process either a word in a sentence or a given number of words. However, only one thematic relationship is present for each word. This thematic element may be, for example, the topic having attractor value 2, the focus having attractor value 30 or the action having attractor value 20. However, it can also have the attractor value set to 0, indicating that there is no thematic relationship for this particular word in a given sentence.

The theme attractors 120 perform a number of tests on the sentence. For example, one sequence of events may result in first looking in the main clause and the subordinate clause for the topic, the focus and the action. The next step may require looking for the main clause with a promotable theme. This may be, for example, a clause with verbs of saying such as "John said that ...". The next step may result in the bypassing of indefinite subjects and the bypassing of meaningless subjects. The attractors 120 also deal with the functionality of promoting certain constituents of a sentence. For example, one step might promote topicalizers, which indicates transferring the topic away from a given word. A topicalizer is a word that casts its topic on something else, such as "The matter with teenagers is ...", wherein "matter" is the topicalizer. The attractors 120 also promote nouns with possessive post modifying prepositions. For example, in the sentence "The advantage of this device is ..." wherein "advantage" is the noun, "of" is the post modifying preposition, the attractors 120 will promote the topic from the noun "advantage" to the word "patent", which is the real topic of the sentence. The attractors 120 can also promote verbs with post-posed infinitives. For example, in the sentence "I want to mail this letter.", the action thematic element is promoted from the word "want" to the word "mail", which is the action of the sentence. Therefore, it can be seen that the process carried out by the thematic tests of the attractors 120 merely are operable to determine what the thematic nature of any given word is in the context of the sentence and also knowing the various thematic characteristics for given word. As described above, the thematic characteristics for each word are predefined and stored in the lexicon 26.

In the process steps attached as APPENDIX A, there are a plurality of small isolated tests. One of these tests is illustrated in detail in TABLE 9.

## TABLE 9

```
mtn wd_topicalizer_phrase,get_words,tp_4a1
mtn wd_meaningless_word_phrase,get_words,tp_4a1
vt_prep_phrase,get_n_word,tp_4a
mt wd_possession_prep,get_n_word,tp_4a
; noun 'of' prep phrase ' the advantage of this chart...'
jmp tp_4
```

TABLE 9 is related to a process in which the first step tests whether the current word was not a topicalizer. The next test determined whether the next word was not meaningless. The next step tests whether the word was a prepositional phrase. The next step tests whether the next word is the possessive preposition. The next step then jumps to a point in the process that determines the next step which is one that looks for topic in a post-modifying phrase.

Style

Style is a series of indexes that provides an indication of the style of writing that exists in the document at the sentence level. This index allows the system to be tailored to a particular audience with the style attractor values providing another level of information about the sentence. The style indexes that are provided in the present embodiment are listed in TABLE 10:

## TABLE 10

| STYLE INDEXES | |
|---|---|
| Ambiguity Level | Slang Phrase |
| Cohesion | Literary Phrase |
| Coherence | Inflection Level |
| Human Interest | Monotony Level |
| Readability | Maturity Level |
| Flow | Word Length |
| Rate of Retention | Syllable Length |
| Clause Level | Character Length |
| Difficult Word Phrase | Climatic |
| Idiom | Sentence Complexity |
| Derogatory | Clarity |
| Incorrect Word | Word Complexity |
| Formal | Verb Strength |
| Unclear Word | Action Level |
| Filler Phrase | Verb Clarity |
| Visual Form | Pronunciation |
| Breezy Phrase | Abstract |

The Ambiguity style index provides a measure of the ambiguities in the text. The Cohesion Index is an indication of how well the topic was established in the sentence and how well the topic and focus relate across sentence boundaries. The Coherence Level measures the consistency of the topic. The Human Interest Index measures the human interest level of a document. The Readability Index measures how readable a given text is. The Flow Index measures the smoothness or the seamlessness of the writing. The Rate of Retention Index measures how well the reader will remember what is written. The Clause Level Index measures the unnecessary stops and hesitations that may detract a reader. The Difficult Word or Phrase Index measures the number of times a difficult word or phrase occurs. The Idiom Index measures the number of times an idiom occurs. The Derogatory Index measures the number of times a derogatory word or phrase occurs. The Incorrect Word Index measures the number of times an incorrect word or phrase occurs. The Formal Index measures the number of times a formal word or phrase occurs. The Unclear Word Index measures the number of times an unclear word or phrase occurs. The Filler Phrase Index measures the number of times a filler phrase occurs. The Visual Form Index measures the number of times a visual form phrase occurs. The Breezy Phrase Index measures the number of times a breezy phrase occurs. A breezy phrase is some type of regional or folksy phrase, a colloquialism or an informal word or phrase.

The Slang Phrase Index measures the number of times a slang phrase occurs. The Literary Phrase Index measures the number of times a literary phrase or word occurs. The Inflection Level Index measures the level of author intrusion in a document. The Monotony Index measures the predictable sameness of a sentence or text. The Maturity Level Index measures the number of language devices attempted by the writer versus the number of error messages generated. The Word Length Index measures the average number of words in a sentence. The Syllable Length Index measures the average number of syllables in the words. The Character Length Index measures the average number of letters in a word. The Climactic Style Index measures the pattern of sentences. This index examines the sentence for the order of the least important sentences and the most important sentences. The Sentence Complexity Index measures the complexity of sentences, but not how well complexity is utilized. The Clarity Index measures how well subjects are expressed as agents and how well actions are expressed as verbs. The Word Complexity Index measures how difficult the word is to comprehend. The Verb Strength Index measures the weighted frequency of lexical verbs, which are strong, versus the frequency of zero verbs, which are weak. The Action Level Index measures the main actions in the sentence, measured by a lexical verb in the main clause. The Verb Clarity Index measures how well actions are being expressed by lexical verbs. The Pronunciation Index measures the pronunciation difficulty of words in a sentence. The Abstract Index measures the level of abstract nouns in a sentence or text.

When generating the various style index levels, a process is executed whereby the lexicon is examined, the context chaos loop is examined and the thematic chaos loop is examined. By way of example, three of the style indexes and their processes are described, the reflection level style index, the retention level style index and the readability style index. Referring now to FIGURE 12, there is illustrated a flow diagram for the reflection level index which starts at a block 210. The program flows to a block 214 to identify the verbs of cognition and perception. This requires looking at which of the words in the sentence have the flags for perception, cognition, mental or stative extensive set. A value of fifteen is given to each of these verbs, as indicated by block 216. The program flows to a block 218 to count the number of times the First Person Pronoun was used. To determine this, the flags that are examined are the first, nominative, objective (only with passive primary), the possessive and the person flags. The program then flows to a block 220 to provide a value of fifteen for each use of the First Person Pronoun. The program then flows to a function block 222 to identify the number of Adjuncts utilized in the sentence. Some of the flags that are examined are the Adjunct, Viewpoint, Formulaic, Focusing, Additive and Limiting Exclusive. In the program, a value of five is given for each Adjunct identified, as represented by a block 224. The program then flows to a function block 226 to identify the number of Disjuncts. Some of the flags examined are the Disjunct, Style, Attitudinal and the Evidence flags. The Disjunct is represented by block 228. The program then flows to block 230 to identify the verb phrases. The flags examined are the Attitudinal (past) Flag and the Hypothetical Flag. A value of five is given for the Attitudinal Flag and a value of fifteen for the Hypothetical Flag, as represented by block 232. The program then flows to a block 234 to identify the main clause and subordinate clause(s). A value of thirty is given for each use of the First Person Pronoun occurring in combination with a Verb of Perception/Verb of Cognition in the main clause, as represented by the block 236. The program then flows to a block 238 to identify Auxiliary Models. Some of the flags and their weights associated therewith are Viability, weight five, Passability, weight five, Permission, weight five, Volition, weight ten, Logical Necessity, weight fifteen, Willingness, weight ten, Intention, weight fifteen, and Legal Conjunction, weight twenty. The program then assigns the appropriate weight values, as indicated by function block 240. All the values above are then added, as indicated by block 242, to provide the reflection level at the sentence level. The program then flows to a block 246 to add the reflection levels at the sentence level to provide the reflection level of the text. The program then flows to a function block 248 to divide the text reflection level by the number of sentences in the text to give the average reflection level. The program then flows to an end block 250.

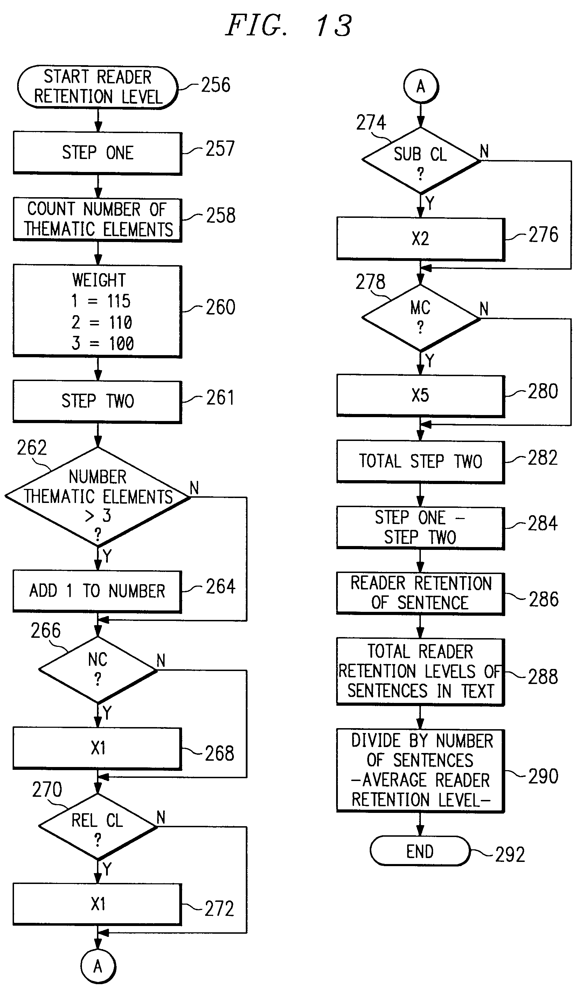

Referring now to FIGURE 13, there is illustrated a flow chart for the Reader Retention Level, which is initiated at a block 256. The program flows to a block 257 to initiate a "step one" and then to a block 258 to count the number of thematic elements in the sentence. The program then flows to a block 261 to initiate a "step two" and then to a block 260 to provide a weight of 115 for one thematic element, a weight of 110 for two thematic elements and a weight of 100 for three thematic elements. If there are more than three thematic elements, a value of one is added to the number of thematic elements, as indicated by a decision block 262 and block 264. If there are less than three thematic elements, both the block 264 and the "N" path of decision block 262 flow to the input of a decision block 266. Block 266 decides whether the thematic elements occurred in a noun clause. If so, the program flows to a block 268 to multiply the value by one, and if not, the program flows along an "N" path to the input of the decision block 270, the output of block 268 also flowing to the input of decision block 270. Decision block 270 determines if the thematic element occurs in a relative clause and, if so, the program flows to function block 272 to multiply the value by one and then to the input of a decision block 274. If it is not a relative clause, the program flows along the "N" path to the input of decision block 274.

Decision block 274 determines if the thematic element occurs in a subordinate clause. If so, the program flows to the input of a function block 276 to multiply the value by two and then to the input of a decision block 278. If not, the program flows along the "N" path from decision block 274 to the input of decision block 278. Decision block 278 determines whether the thematic element occurred in a main clause. If so, the program flows to a function block 280 to multiply the value by five and then to the input of a function block 282. If the thematic element was not in the main clause, the program flows along the "N" path to the input of function block 282. Function block 282 totals the values for step two from the input of the decision block 262 to the output of both decision block 278 and function block 280. The program then flows to a function block 284 to subtract the value of step two from the value of step one. This provides the Reader Retention Level of the sentence, as represented by a function block 286. The Reader Retention Levels of all the sentences in the text are then totalled up, as indicated by block 288, and then divided by the number of sentences to provide the average Reader Retention Level, as indicated by block 290. The program then flows to an end block 292.

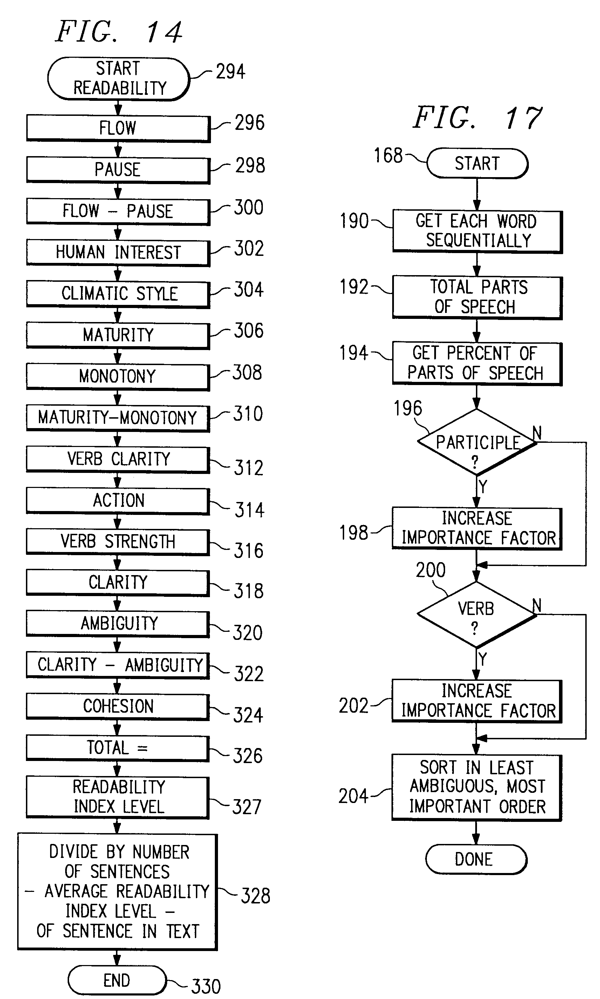

Referring now to FIGURE 14, there is illustrated a flow chart for the Readability Index Level, which is initiated at a start block 294. The Readability Index is the index that illustrates how the levels of the other style indexes are utilized as an input. In the Readability Index, the first step is to determine what the Flow Index Level is, as represented by function block 296, then determine what the Pause Index Level is, as represented by function block 298, then determine what the difference between the Pause Index Level and the Flow Index Level is, as indicated by block 300. The program then flows to a function block 302 to determine what the Human Interest Index Level is, then to a function block 304 to determine what the Climactic Style Index is, then to a function block 306 to determine what the Maturity Index Level is, then to a function block 308 to determine what the Monotony Index Level is and then to a function block 310 to determine what the difference between the Monotony and the Maturity Index is. The program then flows to a function block 312 to determine what the Verb Clarity Index Level is, then to a function block 314 to determine what the Action Index Level is, then to a function block 316 to determine what the Verb Strength Index Level is, then to a function block 318 to determine what the Clarity Index Level is, then to a function block 320 to determine what the Ambiguity Index Level is, and then to a function block 322 to determine the difference between the Ambiguity and the Clarity Index Levels. The program then flows to a function block 324 to determine what the Cohesion Index bevel is and then to a function block 326 to total all of the values above. This provides the Readability Index Level. The Readability Index Level is then divided by the number of sentences in the text to provide the average Readability Index Level of the sentence in the text, as indicated by function block 328. The program then flows to an End block 330.

Pre-Parsing Setup

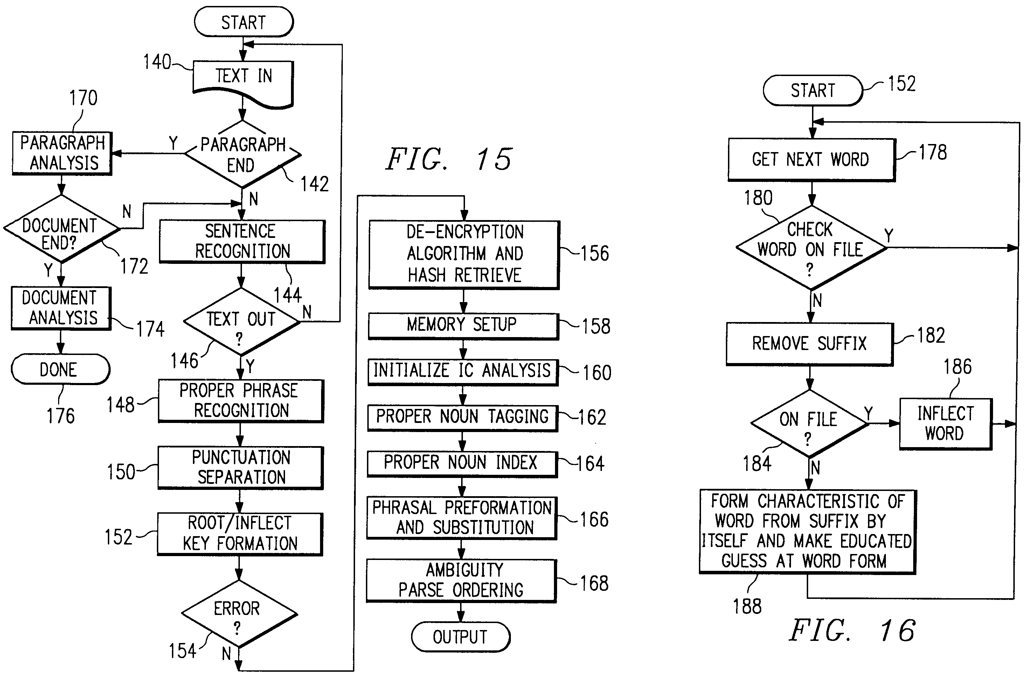

Referring now to FIGURE 15, there is illustrated a flow chart for receiving a textual input and initializing the system prior to actually processing the sentence groups through the attractors. This provides certain options of how the text should be interpreted. The text in input in a text input block 140 and then proceeds to a decision block 142 to determine if the paragraph end is present. This can be as simple as looking for the end of a sentence plus two carriage returns. This varies from system to system but in general this is one way that it can be achieved. In another way, it looks for a sufficient amount of white space in the document and recognizes that this is the end of the paragraph. If the paragraph is not ended, the program flows along an "N" to a sentence recognition block 144 which indicates where it is splitting the text apart into sentences. This process basically looks for the start of the next sentence which is typically a space followed by a capital letter and then the text is examined until a period, a question mark or an exclamation point followed by a space is found. Of course, there are a large number of exceptions such as a period at a word "Dr." or the like. The program then flows to a decision block 146 which indicates the steps whereby the system is outputting the document in some kind of special form. So, the program will flow along the "N" path back to the input of the text input block. Normally, the program flows along the "Y" path.

The decision block 146 flows along the "Y" path to a function block 148 to the proper phrase formation step. This groups together quoted material as a single lexical item and strings the proper nouns as single items. Any quoted material or proper nouns function typically as a single word. Therefore, if one is a writer and says "Bob said, 'How are you today?'", this can be paraphrased by saying "Bob said 'X'". Therefore, the quoted material may function as a single word or as a noun. Some external user input may be required for this step.

After proper phrase formation, the program flows to a function block 150 to separate the punctuation out from the sentence and puts it into a separate location in memory. This allows you then to deal with only the root of the word itself without any special characters. However, the punctuation is necessary to retain since this text can later be output, and also the punctuation is sometimes important to the interpretation of a given sentence. After separating punctuation, the program flows to a function block 152 which is the root/inflection key formation. This is a method by which only base information is stored in the lexicon 36 and not all inflections of a word. Only the prominent inflection form of a word is stored. Therefore, the system looks for the actual word in the lexicon. After the root/inflection key formation process has been formed, the program flows to decision block 154 to determine if a spelling error has occurred. Depending upon how many flags in the system are set, any word that was not directly found could potentially be a spelling error. Since each word coming through the system must have a corresponding match stored in the lexicon 36, there is a possibility that a new word could occur. If the user is trying to keep as few words as possible on file, they would typically not do spell checking. Typically, the indication of a spelling error results in a query to the operator as to whether the word was spelled correctly or not. This is merely a reporting function.

After the spell check, the program flows to a function block 156 to perform a de-encryption algorithm and hash retrieve operation. The encryption block 156 is necessary since the information has been stored in an encrypted manner. Since there may be upwards of a million words that are stored in the database, with each word having a potential of upwards of a thousand flags associated therewith that could be set to various values, this would be unwieldy. The encryption routine basically performs this grouping and packing operation and the de-encryption routine of block 156 allows it to be read out in the proper form. This is a conventional encryption\de-encryption routine, which is generally described in Michael J. McGill, Introduction to Modern Information Retrieval, McGraw-Hill (1983) which is incorporated herein by reference.

After de-encrypting the words, the program flows to a function block 158 to perform a memory setup. This is basically just general memory management routines. The program then flows to a function block 160 to initialize the "Immediate Constituent Analysis" routines. This is where the system builds the initial forms for the attractor values. The attractor values do not just start at zero. They start off with the best approximation that is derivable from the database itself. It basically gives it as good a foothold to initiate the process. These are essentially some very basic judgments that constitute very rough approximations. The type of decisions that could be made are such things as whether a word could possibly be a noun and the such. This is information that is carried in the characteristics associated with each word, which constitute the flags. For example, if a noun does not have a human or non-human flag set, the initializing routine will determine that the highest probability is that it is a non-human noun since most nouns are not human. For example, "book" and "chair" and "desk" are not human. Therefore, the flag indicating non-human trait will therefore be set. The purpose for this is that it is not necessary to always store the fact that a noun is a non-human noun. One typically only wants to store the exception to this and then fill in the rest interactively.

Another example of initializing the attractors is a situation where a word comes through that is a verb and has a verb flag marked and it is the first word of a sentence. Since a non-infinitive form of a verb can never function as a verb when it is the first word of a sentence, the system recognizes that it should zero out that verb flag if it is not an infinitive form. By setting these flags, it will predispose a large number of the attractors that look at this flag. This increases the processing efficiency since this will cause this large number of attractors to jump out at an early stage in their process. In general, the initializing routines in block 160 are concerned with very basic truths that can always be applied and in which little or no ambiguity exists. Of course, if an ambiguity does exist, the subsequent processing of the attractors will correct for this.

After the system has been initialized, the program flows to a function block 162 to tag the proper nouns. This is where the system looks for every proper noun in a sentence and builds up a table of them such that they are in the Last-In and First-Out (LIFO) form. By forming such a table, the most recent proper noun is disposed on the top of the list and as that list gets deeper and deeper, the bottom level starts dropping off. This is similar to the way the human mind operates in that it is not able to equate what a pronoun reference would be to a proper noun since it is too far back in the discourse. By building up this LIFO, it allows the system one to determine if the first word of a sentence is a proper noun. The proper noun is usually determined as being capitalized. This presents a problem when it is the first word of a sentence. The only way to make this determination is to know that the word has been introduced as a proper noun somewhere else in the discourse. For example, the word "Bill" could be a proper name of an individual or it could be a currency. This will be indexed in a function block 164.

After the proper noun has been tagged and indexed the program flows to a function block 166 for phrasal pre-formation and substitution. This is where phrases like "check out", "get with it" and the like, are grouped together as a single item. After the phrases have been grouped, the program flows to a function block 168 to reorganize the words to order the least ambiguous and most important first, and the most ambiguous and least important last. When this is accomplished, it is easier for the system to process more complex words.

Referring further to FIGURE 15, at decision block 142, if the determination is made that a paragraph end had occurred, the program would flow to a function block 170 to perform a paragraph analysis and then flow to a decision block 172 to determine if the document end had occurred. If not, the program flows to the input of function block 144, and if Yes, the program flows to the input of a function block 174 to perform a document analysis and then to a terminate block 176.

Referring now to FIGURE 16, there is illustrated a flow chart for the root/inflection key formation block 152 which, after initiation, flows to a function block 178 to get the next word. The program goes to a decision block 180 to check if the word is on file. If it is on file, the program returns back to the input of the block 178 to get the next word. However, if it is not on file, the program flows along the "N" path to a function block 182 to remove the suffix. For example, if the word were "giving" the root word "give" is the word that would be on file. So, the words "gives" and "giving" are potentially going to be inflected forms that are going to look for the word "give" as a root by taking off the suffix "ing" and replacing it with an "e". It is not necessarily the removal of the suffix but a suffix type computation that allows you to get down to the form of the word that could be functioning as the root. The program then flows to a decision block 184 to determine if the word with the suffix removed is on file. If it is, the program flows along a "Y" path to a function block 186 to inflect the word. In this manner, all the characteristics for the root word are pulled up with the inflection indicated in the characteristics of that word. For example, the root word "give" in the database may be selected in response to receiving the word "gives". This would only require setting the plural flag. By using the inflection routine, only the root words need to be stored in the database and the inflected forms thereof can be indicated in the flags associated with the words in the characteristics.

If the root of the word was not in the lexicon, the program will flow along the "N" path from the decision block 184 to a function block 188. In this function block 184, the system would have to form the characteristics of the word through analysis of the suffix. Certain suffixes typically have certain types of words associated with them. The words ending in "ment" would typically be a noun. So, by going through a suffix analysis and making a guess at what type of word would be based on the suffix, one could set the word up. This guess would result in extracting the root word that is on file. In order for this to work correctly, all verbs would have to be on file. This would primarily be directed toward nouns. For example, words ending in "ly" are typically adverbs. Exceptions to that such as "iene" words that end in "ly" would be an adverb and, as such, would have to be on file. An example of words that would come up are those that individuals would come up with such as "Reaganomics". If this word were not in the database, it would be recognized as a noun. This guess is typically only utilized for one cycle in the process.

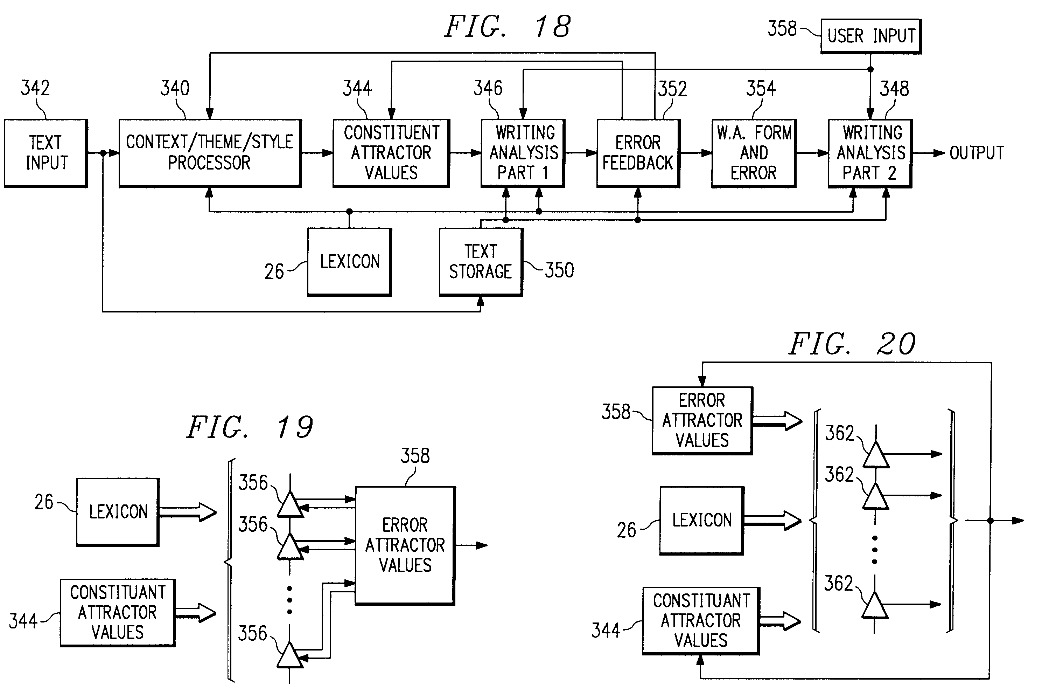

Referring now to FIGURE 17, there is illustrated a flow chart for the ambiguity parse ordering block 168. The process would flow to a function block 190 to get each word sequentially. The process would then flow to a function block 192 to total up the parts of speech for each word. This would determine how many parts of speech each word had from examining the characteristics for that word in the lexicon. For example, a word could be classified as being a noun, a verb, a preposition and a conjunction. That is a relatively large number of parts of speech. Most words would typically be in the 1-3 range. Since there are eight defined possible parts of speech, this would represent a percentage of the total parts of speech. This would be determined at a function block 194. It is a general premise of the present invention that the higher percentage of the parts of speech that is present, the more ambiguous a word would be. Therefore, the higher this number, the higher the ambiguity factor of a given word.

After determining the percentage of the total parts of speech that exist, the program flows to a decision block 196 to determine if the word is a participle. If it is, the program flows along a "Y" path to a function block 198 to increase the importance of the factor. If it is not a participle, the program flows along a "N" path to the output of the function block 198. The program then flows to a function block 200 to determine if the word is a verb. If it is a verb, the program flows along a "Y" path to increase the importance factor and, if not, the program flows along a "N" path to the output of the function block 202. The program then flows to a function block 204 to sort the words in order where the least ambiguous, most important words are in the top of the order. The purpose for the ambiguity parse ordering is to process the words in a different order than that which they were originally received. The order is determined upon the processing carried out by the attractors. In this manner, the portions of the sentence that would occupy a lot of processing time in the attractors would be processed first, this being determined as the most important, least ambiguous words. Of course, the more ambiguous the word is, the more difficult it is for the attractors or the chaos loop to settle out. For example, in the sentence "Running down the street, the man said 'hello'." the word "running" does not function as a verb. Rather, it is a participle introducing a noun clause, or some type of clause. However, it is functioning very much like a verb but it is known that it can't function as the main verb of a sentence and it would therefore occupy the process time of the attractors that determine the status of a verb that is not the main verb of the sentence. It would be desirable to determine this right at the very beginning and to remove the verb status of that word. Therefore, the most important thing to do is to shift the verb status of a participle.

WRITING ANALYSIS

Referring now to FIGURE 18, there is illustrated a block diagram of a system for analyzing the contextual, thematic and stylistic form of the sentence in accordance with general writing principles that reflect acceptable views of a good contemporary writer of the English language. The sentence form is found in the chaos loop which, as described above, provides the contextual relationships, the thematic relationships and also the stylistic relationships that exist in the sentence. It stores these as constituent attractor values. The processor for determining these constituent attractor values is generally referred to with the reference numeral 340. The processor 340 receives as an input the text from a text input block 342 and also the definitional characteristics of all the words from the lexicon 26. The output of the processor 340 comprises the constituent attractor values, which are stored in block 344. These are the values represented by the diagram of FIGURE 8 described above.

The constituent attractor values were determined by applying linguistic principles to the words in the sentence to determine their contextual relationships, thematic relationships and stylistic, relationships. The writing analysis is performed by applying the general writing principles to the sentence as a whole. When a given sentence does not agree with the general writing principles, this generates an error. This constitutes one of the outputs of the writing analysis system of the present invention.

The writing analysis system of the present invention is comprised of a first part 346 and second part 348. The first part 346 is the portion that applies the general writing principles of the given language to the sentence as a whole. The first part of the writing analysis system 346 receives as an input the constituent attractor values from box 344, the definitional characteristics of the words from the lexicon 26 and also the actual words themselves, which are stored in a text storage area 350. The text that is stored in the text storage area 350 has pointers associated therewith that allow any constituent attractor value associated with any word in the sentence to be associated with the given text for that word. Therefore, the first part of the writing analysis system has available thereto the actual text that is associated with the constituent attractor values in block 344.

The first part of the writing analysis system is operable to apply the general writing principles to the sentence as a whole and generate error attractor values. The error attractor values represent the form of the writing analysis. An error feedback block 352 provides another level of the writing analysis system. When something in the sentence does not agree with the general writing principles as determined by the first section of the writing analysis system 346, the constituent attractor values in block 344 can be influenced by the error feedback block 352 and then the sentence reprocessed through the processor 340, as will be described in more detail hereinbelow. The output of the error feedback block 352 provides the form of the writing analysis which essentially comprises the chaos loop with the contextual, thematic and stylistic relationships in addition to the errors, as represented by a block 354.

The output of the block 354 is an input to the second part of the writing analysis system 348 which essentially interacts with the user to communicate the results of the errors to the users in a number of different formats. The output can be a corrected document, it can be the initial document with errors and observations injected into the text at appropriate points, it can be a report of errors in a sentence, it can be the output of the block 354, it can allow the user to execute an interactive tutorial, which will be described hereinbelow, it can output the sentence in various forms with such things as the topic, etc., highlighted or bolded, it can output graphs of the stylistic makeup of the document and it can output the document with various editing\making symbols interposed in the text. Representative ones of these outputs will be described hereinbelow. The writing analysis system in block 346 and block 348 can receive a user input, as indicated by a block 358. This allows the user to input certain parameters into the system that are utilized by the writing analysis system in block 346 to generate the various outputs.

Referring now to FIGURE 19, there is illustrated a block diagram of the first part of the writing analysis system in block 346. As described above, writing analysis is performed by applying predetermined general writing principles to the sentence as a whole. These are principles that are observed by the populace to be correct. The general writing principles are divided up into small portions, each represented by an attractor 356. The attractors 356 receive as inputs the data stored in the lexicon 26 and also the constituent attractor values in block 344. The attractors 356 analyze the information in the lexicon 26 and the constituent attractor values in block 344 at the level of the sentence. Therefore, they receive from the block 344 information as to the beginning and the end of the sentence.

Each of the attractors 356 is operable to apply the associated general writing principles to the sentence and determine if the sentence satisfies those principles. If not, one of a plurality of error attractor values in a box 358 is set. Each of the attractors 356 has as the object thereof to make observations about the sentence from the standpoint of the associated general writing and grammatical principles and determine that an error in fact exists. If the error is not there, the processing proceeds such that the general writing principles of another one of the attractors 356 is applied. In general, each of the attractors 356 is operable to set one of the error attractor values in box 358. However, some of the error attractor values can be influenced by one or more of the attractors 356. Additionally, the attractors 356 can also receive as an input the error attractor values that are set by other attractors 356. Therefore, each of the attractors 356 operates independent of the other attractors 356.

The type of errors that are generated by the attractors 356 and the general writing principles that are applied are divided into different groups or categories. A "Surface" category is provided which makes observations of things that are essentially independent of the contextual, thematic and stylistic relationships embodied in the chaos loop, such as double punctuation. Generally, it is not directly related to grammar. It essentially is involved with errors that are made at a non-grammar level. A category "Grammar" relates directly to the grammatical principles that exist in the given language. A category "Punctuation" is concerned with the general punctuation of a given sentence and a category "Usage" is directed toward making determinations as to whether the grammatical usage of a word or phrase is proper. For example, the Usage category will determine whether one would use "different than" or "different from". Another group of categories are the "Style" categories. There are a number of categories that make up the Style categories which are as follows:

    Concision
    Precision
    Antithesis
    Balance
    Elegance
    Relations
    Logic
    Unity
    Transitions
    Discourse
    Cohesion

The Style categories are generally based on the context of the writing at the sentence level which is concerned with stylistic relationships between the words. This is to be compared with the Style indexes in the chaos loop that are concerned with the statistical relationships in a sentence such as balance of the number of adjectives to the number of nouns. For example, in the sentence "I saw a man in the park with a telescope.", a stylistic error of logic exists. This is because the reader is generally unsure of whether the "man in the park" had a telescope" or whether "the park" had a telescope. There is nothing grammatically wrong with this sentence but it is ambiguous from a stylistic standpoint. The errors generated in the Style categories will provide an indication of this.

In general, the user has the ability to turn off groups of the attractors. This may be necessary when the analysis of a given document results in a large number of errors, which errors are organized in a hierarchical structure. Typically, the attractors involved with the grammatical principles will be on top of the hierarchical structure.

When dealing with the Style categories of attractors, the reader can input information to influence how the stylistic attractors will operate in the writing analysis system. For example, the reader is provided on a computer display three columns, labeled Document Type, Reader Level and Audience Type. Under the Document Type column, there are seven categories, Memo, Book, Speech, Magazine Article, Thesis or Report, Business Correspondence and Newspaper Article. In the second column, Reader Level, there are nine categories, Pre-School, Grammar School, Junior High, High School, BA, MS, Ph D, Upper and Colleague. In the third column, Audience Type, there are seven categories, Business, Political, Religious, Technical, General, Literary and Informal Group. By selecting one of the categories from each column, the reader can influence the manner in which the text is analyzed by the writing analysis system. This is essentially the user input to the writing analysis system.

By way of example, a number of the routines associated with given errors will be described in the different categories. The error E109 is an error that is designed to catch a sentence such as "What were not some of the reasons?" This is a sentence wherein it is inappropriate to use a negative with a "wh" question, or any sentence that is a question or interrogative starting with a "wh" word such as "what". It is a grammatical principle of the English language that use of a "wh" word in a query should not have a negative associated therewith. The routine for the attractor associated with the error E109 is illustrated in Table 11.

## TABLE 11

```
vc_apunc,number_words,question,whqn_2
set_loop get_words,1,number__words,whqn_1a,whqn_2
vcn _orig_order,get_words,1,whqn_1b
loop_back get_words,whqn_1a
mt wd_wh_element_conj,get_words,whqn_2
set_loop get_neg,1,number_words,whqn_1c,whqn_2
mtn wd_negative_form_adverb,get_neg,whqn_1e
mtn we_negative_adverb,get_neg,whqn_1e
mtn wd_negative_verb,get_neg,whqn_1e
mtn wd_ind_negative_prn,get_neg,whqn_1e
mtn wd_negative_adj,get_meg,whqn_1e
mtn we_negative_prep,get_neg,whqn_1e
loop_back get_neg,whqn_1c
; "what were not some of the reasons"
record_error 1,0,get_neg,get_neg,get_wds,get_wds,109
```

In Table 11, the program first determines if the sentence has the appropriate punctuation associated with a question. This is the first line of code. The next three lines of code check to see if there was an inversion of some type which would indicate a certain form that the sentence had. The fifth line goes to the lexicon to see if there is a word having the flag "wh element conjunction" set, which illustrates that there is a "wh" word in the sentence. The next seven lines of code determine whether there is a negative word of some type in the sentence, a negative form adverb, a negative adverb, a negative verb, an indefinite negative pronoun, a negative adjective, or a negative preposition. If any words in the sentence have one of these flags set in association with the word, then error E109 is set. Otherwise, the process determines that no error exists in the sentence.

In addition to error E109, there are other straightforward grammatical errors that are tested for. For example, the error E1 is the most classic error which determines whether there is a lack of subject/verb agreement in the sentence. This error would be set for the sentence "The men is running down the street." in that it would be improper to say "is" instead of "are". Another error, E50 looks for a count noun that does not have determiner. In the sentence "candidate showed up for the interview.", it would be determined that the word "the" or the word "a" should be utilized before the word "candidate". In another error, E11, the sentence is looked at to determine if the word "a" is used with a plural noun. An example of such a sentence would be "A men were moving the cargo." wherein the use "A men" should be "The men".

The error routine that sets one of the error values in the Style category is illustrated in Table 12. Since this is a stylistic error, it is essentially an observation about something to do with writing style at the sentence level. Specifically, the routine illustrated in Table 12 is for the Error E92, which measures a clash between a concrete noun with certain types of verbs. This is to be distinguished over sentences wherein certain types of verbs take abstract nouns. The error will output the word number for the verb and the word number for the object that clashes with this verb. Therefore, there are two relationships that are output in association with error E92.

## TABLE 12

```
set_loop get_words,1,number_words,cac_1,cac_2
set_around get_words,get_pword,get_p2_word,get_n_w
vt _noun,get_words,cac_3
vt _direct_object,get_words,cac_3
vt -object_noun_head,get_words,cac_3
z get_noun
findr _verb_phrase,get_p_word,1,get_noun,cac_3
z get_verb
findr _verb,get_noun,1,get_verb,cac_2
cv _main_clause,get_words,get_verb,cac_3
cv _logic_breaks,get_words,get_verb,cac_3
mtn wd_human_only_verb,get_verb,cac_3
mtn wd_personal_knowledge_verb,get_verb,cac_3
mtn wd_factual_verb,get_verb,cac_3
mtn wd_possession_verb,get_verb,cac_3
mtn wd_emotion,get_verb,cac_4
mtn wd_empty,get_verb,cac_5
mtn wd_body_sensation,get_verb,cac_5
mtn wd_perception_verb,get_verb,cac_5
mtn wd_physical_verb,get_verb,cac_5
mtn wd_movement_verb,get_verb,cac_5
mtn wd_location,get_verb,cac_5
Mt wd_concrete_noun,get_words,cac_6
mt wd_animate_noun,get_words,cac_6
mtn wd_abstract_noun,get_words,cac_6
jmp cac_3
mtn wd_concrete_noun,get_words,cac_3
record_error 1,0,get_words,get_words,get_verb,get_v
loop_back get_words,cac-1
```

The routine in Table 12 starts off by examining the sentence for a noun in the third line thereof. The next line determines if the noun is a direct object. The fifth line of the code determined if it is the head of that object. The next three lines of code are utilized to find the verb phrase that preceded this object. The ninth line of the code determines the actual verb in the verb phrase and the tenth line tests to determine if the verb and the object that had been found are in the same main clause. The eleventh line tests to see if the verb and the object are in the same logic rank, and then the next ten lines of code test checks any one of a number of specific verb flags in the lexicon associated with words in the sentence to see if they are set. These verb flags are the human only flag, the personal knowledge flag, the factual verb flag, the position verb flag, the emotion flag, the empty flag, the body sensation flag, the perception verb flag, the physical verb flag, the movement verb flag and the location flag. If none of the verb flags have been set, then the next line of code determines if there is a combination of a concrete noun and an inanimate noun that is not an abstract noun. If either one of the verb flags are set or if there is a combination of the concrete noun and an inanimate noun that is not an abstract noun, the program proceeds to line twenty seven to determine if there is not a concrete noun in the sentence. If there is not a concrete noun, then the error E92 exists. Therefore, if it is a concrete noun or it is an inanimate noun or it is not an abstract noun, then this sets error E92. Otherwise, the error is not set. These stylistic routines therefore provide an observation that is represented by the error number, which observation does not necessarily constitute an error as such.

The other groupings of attractors are very similar to the grammatical and the stylistic error attractors in that each attractor observes the sentence to determine if it satisfies certain general writing principles. The punctuation attractors examine the sentence to determine if errors exist that are generated by punctuation. For example, an error E101 indicates that the sentence should not utilize a comma before a coordinating conjunction when it is coordinating two noun clauses. Another punctuation error, E72, indicates where a comma is required between words in a series of nouns. Another punctuation error, E32, indicates when two main clauses are linked together in a sentence with no coordinating conjunction, and no semi-colon.

Error codes for the usage attractors are, for example, error E22 which indicates poor use of indefinite pronouns with the verb "the". For example, in the sentence "This is our lead candidate.", the phrase "this is" is very indefinite. Another usage error is E221 which indicates that when using a relative pronoun to modify a human noun, one should use "who" rather than "that". For example, the sentence "The girl that was at the dance was my sister." would be poor usage and the preferable sentence would be "The girl who was at the dance was my sister." In the Surface attractors, topographical type errors are indicated. For example, the error E67 indicates that a double punctuation error exists, such as two commas in a row. An error E68 indicates that two of the exact same words have occurred in the sentence. The error E119 indicates that the quoted material or punctuation is not properly within quotes.

Error Feedback

Referring now to FIGURES 19 and 20, there is illustrated a block diagram for the error feedback routines indicated by block 352 in FIGURE 18. The error feedback routines are comprised of a plurality of attractors 362 which each represent a small process that tests the error attractor values output from block 358. The error feedback routines can modify the constituent attractor values and then feed the sentence back into the processor 340 to determine if there was a change in the overall constituent attractor values. Alternatively, errors can be deleted and/or replaced with another error. The error feedback routines attempt to make corrections in the sentence in order to find the best writing-oriented interpretation of the sentence. Since any given language is inherently ambiguous at the sentence level, it is necessary to first identify the area of ambiguity and then try to make a correction. The way in which this correction is made is by making a change or influencing the value of one of the constituent attractor values in the chaos loop, as indicated by block 344, and then reprocessing the sentence through the processor 340 to determine if the errors change. In the preferred embodiment, this process is repeated up to eight times.

As an example of the feedback system, the sentence "The poor man the ship." is examined. For purposes of this example, the chaos loop interprets the terminology "The poor man" as a noun phrase and the terminology "the ship" as a noun phrase. Since the chaos loop processor 340 merely examines the relationships between the words in accordance with the linguistic principles that are embodied therein, this may in fact be the interpretation that results, even though it may be incorrect. With the writing analysis system of the present invention, a decision can be made that a noun phrase with no verb constitutes an error. The linguistic principles that were utilized to define the form of the chaos loop in the constituent attractor values in block 344 did not necessarily determine whether the sentence was a good sentence from an overall standpoint. It is the writing analysis section that determines this. Therefore, if the writing analysis and error feedback routines determine that two noun phrases with no verb constitute a very ambiguous sentence, it must then make a determination as to what steps need to be taken to try and resolve this ambiguity. One method for doing this is to change the word "poor" to a noun and then run the entire sentence back through the processor 340. Hopefully, this would come out with a more grammatically correct sentence which would generate no errors. However, even without errors, the sentence is still ambiguous. The writing analysis section would indicate this ambiguity by outputting a message such as "The phrase 'poor man' is ambiguous."

Table 13 illustrates a representative one of the error feedback attractors that determines whether the error E18 exists. This error indicates that some trouble exists in locating the subject in a given sentence. This routine tries to look at nouns followed by adjectives and then change the noun into an adjective and try to determine if that helps the situation after the sentence has been reprocessed by block 340.

TABLE 13

```
vt _noun,get_words,tm_88a
vt _adj,get_p_word,tm_88a
vt _adj,get_n_word,tm_88fa
mt wd_cardinal_det,get_n_word,tm_88fa
vt _complete_subject,get_p_word,tm_88fa
vt _predicate,get_words,tm_88fa
cv _logic_breaks,get_words,get_p_word,tm_88fa
cv _logic_breaks,get_words,get_n_word,tm_88fa
cv _noun_phrase,get_words,get_p_word,tm_88fa
vt _pos_adj,get_p_word,tm_88fa
; going to my final two choices ... final two
vs _adj,get_words
vz _c_noun, get_words
vz _noun,get_words
mov _bstore1,121
mov _else_flag,5
move _bstore2,get_words
jmp tm_end
```

In the first line of code, the routine tests to see if the current word can be a noun. If so, the next line of code checks the previous word to see if it is an adjective. The next line of code checks to see if the next word is an adjective and the next line of code checks to see if the next word is a cardinal determiner. The next line of code, line five, checks the previous word to see if it is in the subject and in the next line checks the current word to see if it is in the predicate of the clause. The next line, the seventh line of code, checks to see if the current word and the previous word are in the same logic section of a clause. The next line of code checks the current word and the next word to see if they are in the same logic section of the clause. The next line, the ninth line of the code, checks the current word and the previous word to see if they are in the same noun phrase. The next line of code checks the previous word to see if it can possibly function as an adjective. If all of the above tests are true, then it sets the adjective attractor value for the current word in the constituent attractor values in block 344. This is the twelfth line of code. In the next line of code, the routine zeroes the common noun attractor value for the current word and then the next line of code zeroes the noun attractor value for the current word. The fifteenth line of code sets a tracking flag to an "on" state. This is just for the purpose of internal printouts for tracking down errors. The next line of code, the sixteenth line of code, tells the system to go to a particular place in the sequence of attractors to feedback the chaos loop for processing. Since the attractors are also arranged in groups of, for example, Parts of Speech, Clause Constituents, etc., it is possible to bypass certain groups of attractors such as the Parts of Speech. The next line of code, the seventeenth line, tracks the current word that had been processed through the routine for purposes of analyzing the error routines. The last line of code, the eighteenth line, jumps to the end.

Style Graph Output

One output that is provided by the present system is a plot of the Style indexes stored in the constituent attractor values in block 344. In this output mode, a graph is generated that shows the flow of the various style indexes in the documents on a sentence level. A reference level is provided and also a weighted average. The user inputs parameters, as described above, in response to the display illustrating the three columns, Document Type, Reader Level and Audience Type. With these inputs, the various reference levels for the graphs can be set.

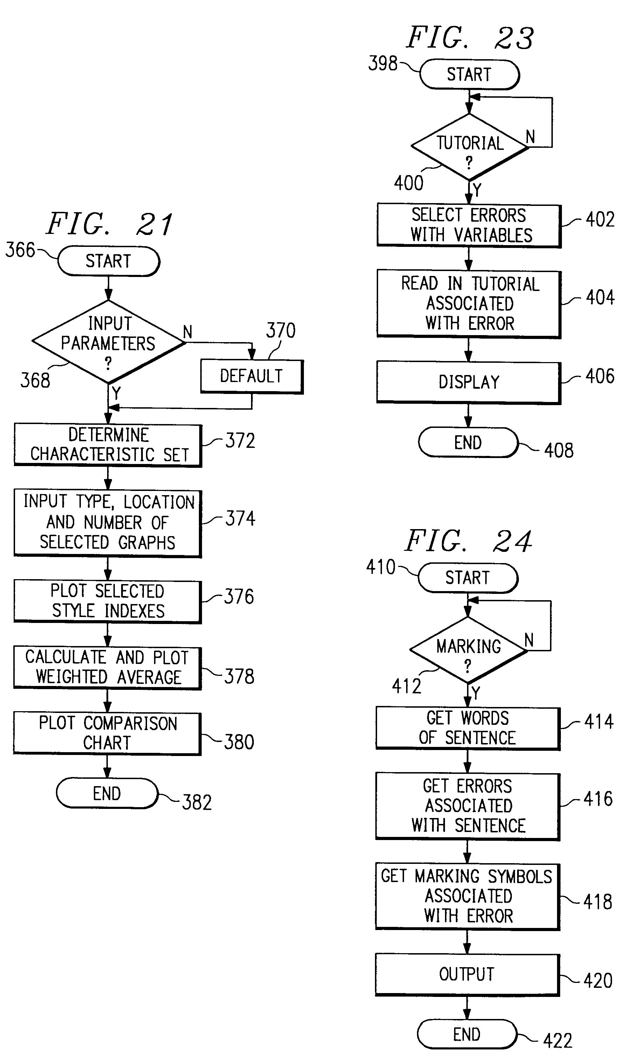

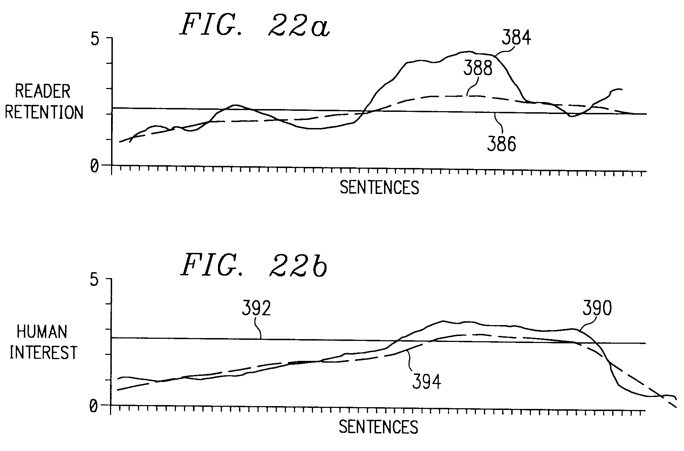

Referring now to FIGURE 21, there is illustrated a flow chart for allowing the user to interface and set these parameters. The program starts at a start block 366 and then flows to a decision block 368 to determine if new parameters are being input. If not, the program flows through a default block 370 to set default values. After determining the parameters, the program flows to a function block 370 to determine the characteristic set, i.e., how the graphs are to be interpreted wherein it sets comparison values. The program then flows to a function block 374 to input the type, location and number of selected graphs. This basically determines where particular graphs are located on the screen. For example, graphs for the Human Interest and Reader Retention could be placed one over top of the other to provide a much better visual comparison. The program then flows to the function block 376 to plot the selected Style indexes. The program then flows to a function block 378 to calculate and plot the weighted average on the graphs and then to a function block 380 to plot the comparison chart. The program then flows to an end block 382.

Referring now to FIGURES 22a and 22b, there are illustrated graphs for the Reader Retention Style index and the Human Interest Style index. The Reader Retention Style index of FIGURE 22a illustrates a solid curve 384 which varies from a value of 0 to 5. Solid curve 384 is basically a plot of the Reader Retention Style indexes for the sentences as they sequentially occur in the document. This gives the observer a visual indication of how the reader retention flows through the document. A solid horizontal line 386 is provided which represents the result of the reader's input for what reader retention should be. If the Reader Retention curve 384 falls below the line 386, it represents the expected value. In this manner, one can look at the document and see where reader retention is high and where it is low in a particular document. The weighted average is calculated, as represented by a dotted line 388, which illustrates the overall reader retention of the document.

With reference to FIGURE 22a, the Human Interest Style index is plotted for the sentences as they sequentially occur in a document from a value of 0 to 5. The actual Human Interest Style indexes are plotted with a solid line 390, with a solid horizontal line 392 representing the desired value. A weighted average is indicated by a dotted line 394. The graph of FIGURE 22b illustrates how the human interest varies through the flow of the document.

## Interactive Tutorial

When the user has received a number of error messages output by the system, it may be desirable to learn something about the particular grammatical principles that are embodied by that error message and the routine behind that error message. A tutorial is provided that can be called up by a predetermined set of keystrokes. When the tutorial is brought up for a particular error value, a message is provided and the specific words of the sentence which resulted in the generation of the error message are utilized in the body of the tutorial. When the tutorial is generated, variables are inserted in the text of the tutorial, which variables are replaced by words in the sentence. Since each error message or number can have anywhere from zero, one or two relationships associated therewith, these relationships are available for use in the tutorial. For example, if there were a clash between a subject and an object, these two words would be the relationships that were stored in association with the error number. If, however, the error related to the overall sentence, there would be no need for any particular relationship.

As an example of an interactive tutorial, the sentence "The poor man the ship." would result in the error E117 being generated which, when output as an error message, would read "The word 'poor' and 'man' are difficult to read." When the tutorial is brought up by the user, the tutorial might read as follows:

When words such as "old, young, and [var#1]" are used in a sentence, select the construction with care. When a noun such as [var#2] is used, and this noun can function as a noun or a verb and if the word "[var#1]"... The variables are the various relationships that are available to the system. The person who designs the tutorial merely has to realize what the error message means and put the variables in the right place such that when the tutorial is displayed, the variables are replaced by the specific words. This now provides a much more powerful tool to allow each error message to have multiple associated tutorials that can be brought up by the user, which tutorials utilize the actual words of the sentence that generated the error. These are distinctly different from prior systems which utilize stored data bases that are never varied.

Referring now to FIGURE 23, there is illustrated a flow chart for the tutorial operation. The program flows from a start block 398 to a decision block 400 to determine if the tutorial operation has been activated. If not, the program turns back to the input along the "N" path. When this tutorial has been selected by, for example, a keyed input from the user, the program flows from the decision block 400 to a function block 402 to select the errors and the associated variables stored therewith. This selection is made by the user through manipulation of a cursor to a particular output error message. The program then flows to a function block 404 to read in the tutorial associated with the error and insert the proper portions of the sentence that generate the error in place of the variables in the tutorial. The program then flows to the function block 406 to display the tutorial and then to an end block 408.

Editing Marks

When a document is printed, it is sometimes desirable to determine in the document and in the sentence where errors occur and to intersperse within the text appropriate marks indicating where such things as punctuation errors, ambiguities, etc. exist. Since the relationships of the sentence that resulted in the error exist in association with the error, it is only necessary to determine where the editing marks go relative to these relationships. For example, in the error E117 for ambiguity, a sentence having two words A and B that, when taken together, present an ambiguity would have a relationship for the word "A" and a relationship for the word "B" stored in association with the error number. These relationships would be the word number and the order of the words. The two words would then be highlighted in the printed sentence and the subscripted terminology "(AM" disposed before the word "A" and the subscripted terminology "AM)" disposed after the word "B". In another error, E13, for a fused sentence, there would be two portions of the sentence, a portion "A" and a portion "B". The terminology "(FS)" would be placed before the first portion "A" in subscripted form and the terminology "(FS)" will be disposed after the portion "A" in subscripted form. The same markings will be placed around the portion "B". In another error, E49, indicating the lack of a semi-colon, the two portions of the sentence requiring a semicolon for separation thereof would be indicated with the terminology "(;)" disposed in a subscripted form between the two portions. Since the relationships are stored with the error message, it is only necessary to dispose the marking either at the beginning or at the end of any given one of the relationships.

Referring now to FIGURE 24, there is illustrated a flow chart for the marking routine. The program begins at a start block 410 and proceeds to a decision block 412 to determine if the marking output has been selected by the user. If not, the program flows back along the "N" path to the input of the system block 412. When the marking has been chosen, the program flows from decision block 412 to a function block 414 to get the words of the sentence from the text storage block 350. The program then flows to a function block 416 to get the errors associated with the sentence and then to a function block 418 to get the marking symbols associated with the error. These are then assembled in an output document as indicated by block 420. The program then flows to an End block 422.

In another aspect of the present invention, the writing analysis system examines multiple sentences in a document with respect to the contextual, thematic and stylistic forms. In particular, the thematic elements of a given sentence are compared with the thematic elements of a previous number of sentences which, in the preferred embodiment is ten. The purpose of this is to see if one of the thematic elements, either the topic, the focus or the action, had occurred in a previous sentence which was proximately disposed to a given sentence. In this manner, it can be determined whether the writer is introducing a new topic, focus or action which had not previously been introduced. For example, if a writer had written three consecutive sentences as follows "The boy had a dog.", "The dog was a terrier." and "Three balls were thrown to the dog.", these sentences could be examined to determine how the thematic elements flowed. In the third sentence, the terminology "three balls" is new information that is being introduced. One observation that could be made about this sentence is that it might state "The dog chased three balls." Therefore, by examining the new information in the sentence, typically the topic, the previous sentences can also be examined to determine if this thematic element had previously been introduced to the reader. This provides an indication of the flow of the thematic elements through a document.

In order to determine what the topics are in a sentence, it is necessary to provide some type of information in the lexicon as to what the meaning of a word is. This is stored in the form of connotations of the word. Connotations are meanings that a word has in a given language. These are typically found in a thesaurus. For example, the word "dog" can have a number of connotations, such as follows, animal, male, pursue, the thematic element, etc. Each of these connotations is given a connotative number which is unique and which is stored as part of the definitional characteristics of the word. Therefore, it is only necessary to see if the general connotation for "dog" had occurred in one of the previous ten sentences.

In summary, there has been provided a writing analysis system that utilizes a processor for determining the contextual, thematic and stylistic form of a given sentence. The processor utilizes a plurality of small process blocks that apply small linguistic principles to the words in a sentence to determine the relationships of the words in the sentence from a contextual standpoint. A writing analysis section is then provided for receiving the output of these contextual relationships, i.e. the form of sentence, and then examining the sentence as a whole in accordance with predetermined grammatical and general writing style principles. Errors are then generated if the sentence does not comply with these principles. A feedback system is provided for making slight adjustments in the process for generating the form of the sentence to determine if the errors can be minimized. Since writing involves communication between the writer and a reader that is part of an intended audience, the system of the present invention allows a user to move a document from one that does not communicate well to the intended audience to one that does.

Although the preferred embodiment has been described in detail, it should be understood that various changes, substitutions and alterations can be made therein without departing from the spirit and scope of the invention as defined by the appended claims.

APPENDIX A

```
        Title   topic

        page 58,132

        .model huge
        include c:/ali/equ/edit.equ

        .data

        include c:/ali/mac/edit.mac
        include c:/ali/pub/struct.ext
        include c:/ali/equ/std.equ
        include c:/ali/mac/std.mac

        extrn xcheck_aux_verb:far
        extrn _style_topic:byte
        extrn xtest_determiner:far


get_noun         db        0
get_p_noun       db        0
get_p2_noun      db        0
get_n_noun       db        0
get_n2_noun      db        0
get_verb         db        0
get_p_verb       db        0
get_p2_verb      db        0
get_n_verb       db        0
get_n2_verb      db        0
find_start       db        0
promote_subord   db        0
promote_object   db        0
get_first_verb   db        0

                 .code

                 public _topic

                 extrn   xtrack:far
                 extrn   xtrackv:far
                 extrn xposition_mem:far


_topic           proc far
                 push_all


                 ; _style_topic
                 ; _style_focus

                 ; 1 = complete
                 ; 2 = simple
                 ; 3 = complete/subord
                 ; 4 = simple/subord
                 ; 5 = simple/promoted subord
                 ; 6 = simple/promoted object
```

```
                        reset_var _style_topic,max_words
                        reset_var _expletive,max_words

                        ; do print routine functions

                        set_loop get_words,1,number_words,tp_1a1,tp_1a2
                        vt _noun_phrase,get_words,tp_1a3
                        va _expletive,get_words,2
                        vt _adj,get_words,tp_1a3
                        test_determiner get_verb,tp_1a3
                        vz _expletive,get_words
tp_1a3:
                        vt _verb,get_words,tp_1a4
                        va _expletive,get_words,2
                        check_aux_verb get_words,tp_1a4
                        vz _expletive,get_words
tp_1a4:
                        loop_back get_words,tp_1a1
tp_1a2:

                        ; now start theme

                        z promote_subord
                        z promote_object

                        set_loop get_words,1,number_words,tp_1,tp_2
                        set_around get_words,get_p_word,get_p2_word,get_n_w
    ord,get_n2_word

                        tbeqa get_words,1,tp_3a1
                        cvn _main_clause,get_words,get_p_word,tp_3a1
                        va _style_topic,get_words,99
                        jmp tp_14
tp_3a1:
                        vtn _adv,get_words,tp_3a2
                        vtn _prn,get_words,tp_3a2
                        jmp tp_3a
tp_3a2:
                        mt wd_expletive_adverb,get_words,tp_3a
                        vt _verb,get_n_word,tp_3a
                        mov promote_object,6
                        va _style_topic,get_words,8
                        jmp tp_3
tp_3a:
                        vt _noun,get_words,tp_3b
                        vt _predicate,get_words,tp_3b
                        tv promote_object,tp_3b
                        jmp tp_4b
tp_3b:
                        vt _simple_subject,get_words,tp_3
                        vt _subordinate_clause,get_words,tp_3d
                        tvn promote_subord,tp_4b
tp_3d:
                        vtn _conj,get_words,tp_3
```

```
                    vt _prn,get_words,tp_3c
                    test_relative_prn get_words,tp_3c
                    jmp tp_3
tp_3c:
                    z get_verb
                    z get_first_verb
tp_4e1:
                    find _verb,get_n_word,number_words,get_verb,tp_4e
                    tvn get_first_verb,tp_4e2
                    move get_first_verb,get_verb
tp_4e2:
                    mt wd_that_clause_verb,get_verb,tp_4e1
                    inc get_verb
                    mt wd_infinitive_sign,get_verb,tp_4e3
                    ; the rate was was believed to have been lowered.
                    dec get_verb
                    jmp tp_4e1
tp_4e3:
                    dec get_verb
                    ;mt wd_past_participle,get_verb,tp_4e5
                    ;dec get_verb
                    ;mt wd_aux_pri_pas_verb,get_verb,tp_4e4
                    ;inc get_verb
                    ;jmp tp_4e1
tp_4e4:
                    ;inc get_verb
tp_4e5:
    .               cv _logic_breaks,get_verb,get_first_verb,tp_4e
                    cv _main_clause,get_verb,get_first_verb,tp_4e
                    jmp tp_4f
tp_4e:
                    tv promote_subord,tp_4c
                    jmp tp_3
tp_4c:
                    vt _prn,get_words,tp_4b
tp_4f:
                    check_ind_prn get_words,tp_4g
                    ; one of the men is .... men = topic
                    vtn _prep,get_n_word,tp_4
                    jmp tp_3
tp_4g:
                    mov promote_subord,5
                    mov promote_object,6
                    vt _subordinate_clause,get_words,tp_4f1
                    mov promote_subord,9
                    mov promote_object,10
tp_4f1:
                    va _style_topic,get_words,7
                    jmp tp_3
tp_4b:
                    mtn wd_topicalizer_phrase,get_words,tp_4a1
                    mtn wd_meaningless_word_phrase,get_words,tp_4a1
                    vt _prep_phrase,get_n_word,tp_4a
                    mt wd_possession_prep,get_n_word,tp_4a
                    ; noun 'of' prep phrase ' the advantage of this cha
```

```
          rt ...'
                              jmp tp_4
tp_4a1:
                              vt _prep_phrase,get_n_word,tp_4a2
                              jmp tp_4
tp_4a2:
                              mov promote_subord,5
                              mov promote_object,6
                              vt _subordinate_clause,get_words,tp_4a3
                              mov promote_subord,9
                              mov promote_object,10
tp_4a3:
                              jmp tp_3
tp_4a:
                              tv promote_subord,tp_5a
                              check_ind_prn get_words,tp_5a1
                              jmp tp_5a
tp_5a1:
                              mtn wd_time_noun,get_words,tp_5a2
                              va _style_topic,get_words,promote_subord
                              tbeq promote_subord,5,tp_5a2
                              va _expletive,get_words,4
tp_5a2:
                              z promote_subord
                              z promote_object
                              jmp tp_3
tp_5a:
                              tv promote_object,tp_5b
                              check_ind_prn get_words,tp_5b1
                              jmp tp_5b
tp_5b1:
                              mtn wd_time_noun,get_words,tp_5b4
                              va _style_topic,get_words,promote_object
tp_5b4:
                              z promote_object
                              z promote_subord
                              jmp tp_3
tp_5b:
                              vtn _subordinate_clause,get_words,tp_5
                              check_ind_prn get_words,tp_5b2
                              jmp tp_5
tp_5b2:
                              va _style_topic,get_words,2
                              va _expletive,get_words,4
                              jmp tp_3
tp_5:
                              check_ind_prn get_words,tp_5b3
                              jmp tp_3
tp_5b3:
                              va _style_topic,get_words,4
                              jmp tp_3
tp_4:
                              ; look for topic in post mod phrase

                              vt _prep_phrase,get_n_word,tp_3
```

EP 0 466 516 A2

```
219                             vt _pp_adj,get_n_word,tp_3
220                             z get_noun
221                             find _noun,get_n_word,number_words,get_noun,tp_3
222                             vt _prep_phrase,get_noun,tp_3
223                             cv _prep_phrase,get_noun,get_n_word,tp_3
224                             cv _logic_breaks,get_noun,get_n_word,tp_3
225                             vtn _subordinate_clause,get_noun,tp_6
226                             mt wd_topicalizer_phrase,get_noun,tp_41
227                             inc get_noun
228                             vt _prep,get_noun,tp_4k
229                             move get_words,get_noun
230                             set_around get_words,get_p_word,get_p2_word,get_n_w
     ord,get_n2_word
231                             jmp tp_4
232     tp_4k:
233                             dec get_noun
234     tp_41:
235                             va _style_topic,get_noun,2
236                             va _expletive,get_noun,4
237                             jmp tp_3
238     tp_6:
239                             tvn promote_subord,tp_6a
240                             tvn promote_object,tp_6a
241                             va _style_topic,get_noun,4
242                             jmp tp_3
243     tp_6a:
244                             tv promote_subord,tp_6b
245 .                           va _style_topic,get_noun,promote_subord
246                             tbeq promote_subord,5,tp_6b
247                             va _expletive,get_noun,4
248     tp_6b:
249                             tv promote_object,tp_3
250                             va _style_topic,get_noun,promote_object
251     tp_3:
252                             loop_back get_words,tp_1
253     tp_2:
254                             z promote_subord
255                             z promote_object
256
257                             set_loop get_words,1,number_words,tp_7,tp_12b
258                             set_around get_words,get_p_word,get_p2_word,get_n_w
     ord,get_n2_word
259                             vcn _style_topic,get_words,2,tp_16a
260                             vcn _style_topic,get_words,4,tp_16a
261                             vcn _style_topic,get_words,5,tp_16a
262                             vcn _style_topic,get_words,6,tp_16a
263                             jmp tp_14
264     tp_16a:
265
266                             set_loopr get_verb,get_p_word,1,tp_11,tp_12
267                             set_around get_verb,get_p_verb,get_p2_verb,get_n_ve
     rb,get_n2_verb
268                             vtn _conj,get_verb,tp_12
269                             vtn _prep,get_verb,tp_12
270                             vt _complete_subject,get_verb,tp_12
```

43

EP 0 466 516 A2

```
                          vc _style_topic,get_words,5,tp_12a
                          test_determiner get_verb,tp_12a1
                          jmp tp_16
        tp_12a1:
                          va _style_topic,get_verb,1
                          va _expletive,get_verb,1
                          jmp tp_16
        tp_12a:
                          vtn _subordinate_clause,get_verb,tp_15
                          test_determiner get_verb,tp_12a2
                          jmp tp_16
        tp_12a2:
                          va _style_topic,get_verb,1
                          va _expletive,get_verb,1
                          jmp tp_16
        tp_15:
                          va _style_topic,get_verb,3
        tp_16:
                          loop_backr get_verb,tp_11
        tp_12:
                          set_loop get_verb,get_n_word,number_words,tp_13,tp_
        14
                          set_around get_verb,get_p_verb,get_p2_verb,get_n_ve
        rb,get_n2_verb
                          vtn _conj,get_verb,tp_14
                          vtn _prep,get_verb,tp_14
                          vt _complete_subject,get_verb,tp_14
                          vc _style_topic,get_words,5,tp_14a
                          test_determiner get_verb,tp_12a3
                          jmp tp_18
        tp_12a3:
                          va _style_topic,get_verb,1
                          va _expletive,get_verb,1
                          jmp tp_18
        tp_14a:
                          vtn _subordinate_clause,get_verb,tp_17
                          test_determiner get_verb,tp_12a4
                          jmp tp_18
        tp_12a4:
                          va _style_topic,get_verb,1
                          va _expletive,get_verb,1
                          jmp tp_18
        tp_17:
                          test_determiner get_verb,tp_12a5
                          jmp tp_18
        tp_12a5:
                          vtn _conj,get_verb,tp_18
                          vtn _prep,get_verb,tp_18
                          va _style_topic,get_verb,1
                          va _expletive,get_verb,1
        tp_18:
                          loop_back get_verb,tp_13
        tp_14:
                          loop_back get_words,tp_7
        tp_12b:
```

```
                                ; now label all the main verbs in the sentence

                                set_loopr get_words,number_words,1,tp_20,tp_21
                                set_around get_words,get_p_word,get_p2_word,get_n_w
        ord,get_n2_word
                                vt _verb,get_words,tp_22
                                vt _verb_phrase,get_words,tp_22
                                mt wd_infinitive_sign,get_n_word,tp_22a
                                vt _verb,get_n2_word,tp_22ca
                                va _expletive,get_words,3
                                jmp tp_22d
        tp_22ca:
                                va _style_topic,get_words,30
                                va _expletive,get_words,3
                                jmp tp_22d
        tp_22a:
                                va _style_topic,get_words,20
                                va _expletive,get_words,3
        tp_22d:
                                z get_verb
                                findrn _verb_phrase,get_words,1,get_verb,tp_21
                                inc get_verb
                                move get_words,get_verb
                                set_around get_words,get_p_word,get_p2_word,get_n_w
        ord,get_n2_word
        tp_22:
        .                       loop_backr get_words,tp_20
        tp_21:
                                ; now label all objects

                                set_loopr get_words,number_words,1,tp_23,tp_24
                                set_around get_words,get_p_word,get_p2_word,get_n_w
        ord,get_n2_word
                                vt _noun,get_words,tp_25
                                vt _noun_phrase,get_words,tp_25
                                vt _predicate,get_words,tp_25
                                vtn _prep_phrase,get_words,tp_25
                                vt _object,get_words,tp_25
                                vt _object_noun_head,get_words,tp_25
                                vtn _style_topic,get_words,tp_25
                                mtn wd_time_noun,get_words,tp_25
                                va _style_topic,get_words,30
                                va _expletive,get_words,3
        tp_25:
                                loop_backr get_words,tp_23
        tp_24:
                                pop_all
                                ret

        _topic                  endp
                                end
```

## Claims

1. A writing analysis method for a given language, comprising:

storing in a storage area the contextual form of a sentence that embodies the contextual relationships of the words in the sentence and the definitional characteristics that are expressed by each of the words in the sentence, the contextual relationships and the expressed definitional characteristics based on linguistic principles of the given language;

analyzing the contextual form of the sentence in accordance with writing principles that are observed by the general populace utilizing the given language as being a correct representation of the written use of the given language and generating an observation as to how the contextual form of the sentence compares with the writing principles; and

outputting the observation.

2. The method of Claim 1 wherein the contextual form comprises a plurality of contextual constituent values that define the possible contextual relationships of words in a sentence for the given language, where only select ones of the contextual constituent values are expressed for a given sentence in the given language.

3. The method of Claim 1 wherein the writing principles comprise grammatical principles of the given language and the step of analyzing comprises determining if the sentence as embodied in the contextual form thereof agrees with the grammatical principles, and generating at least one observation if there is a disagreement between the contextual form of the sentence and the grammatical principles.

4. The method of Claim 1 wherein the writing principles comprise punctuation principles of the given language and the step of analyzing comprises determining if the sentence as embodied in the contextual form thereof agrees with the punctuation principles, and generating at least one observation if there is a disagreement between the punctuation principles and the contextual form of the sentence.

5. The method of Claim 1 wherein the writing principles comprise stylistic principles of the given language, these stylistic principles including observations about the style of the sentence in accordance with accepted writing styles, and the step of analyzing comprises determining if the sentence as embodied in the contextual form thereof agrees with the stylistic principles and generating at least one observation if there is a disagreement between stylistic principles and the contextual form of the sentence.

6. The method of Claim 1 wherein the writing principles comprise usage principles of the given language, the usage principles comprising accepted usage of words and groups of words in a sentence in the given language, and the step of analyzing comprises determining if the sentence, as embodied in the contextual form thereof, agrees with the usage principles, and generating at least one observation if there is a disagreement between the usage principles and the contextual form of the sentence.

7. The method of Claim 1 and further comprising:
receiving the textual input of the sentence; and
determining the contextual form of the sentence from the textual input of the sentence.

8. The method of Claim 7 wherein the step of determining the contextual form of the sentence comprises:
storing in a lexicon definitional characteristics for the plurality of words in the given language, the definitional characteristics of a word defining how the word exists in the given language;
determining which of the definitional characteristics in the lexicon are expressed by the word in the context of the sentence in accordance with predetermined linguistic principles that exist for the given language;
determining the contextual relationships of the words in the sentence in accordance with the predetermined linguistic principles for the given language; and
storing in the storage area the contextual relationships for each word in the sentence as the contextual form of the sentence.

9. The method of Claim 8 and further comprising:
testing each of the observations in accordance with one of a plurality of predetermined error principles and generating an associated error feedback signal for each of said error principles tested, each of the feedback signals being a function of the observation tested and the contextual form of the sentence, the feedback signals operable to alter the linguistic principles in a predetermined manner;
altering the linguistic principles of the given language in accordance with the generated feedback signals; and

redetermining the contextual form of the sentence with the altered linguistic principles.

10. The method of Claim 1 wherein the step of storing in the storage area the contextual form of a sentence comprises storing in the storage area the contextual form of a plurality of sentences that represent a document, each of the sentences having associated therewith a sentence number indicating its position in the document.

11. The method of Claim 10 and further comprising storing the stylistic form of the sentence in the storage area in association with the contextual form of the sentence, the stylistic form of the sentence comprising stylistic attributes of the words in the sentence that are based upon the contextal relationships and the expressed definitional characteristics of the words in accordance with predetermined stylistic criteria that relate to contextually oriented arrangements of the words in the sentence and the expressed definitional characteristics of the words in the sentence.

12. The method of Claim 11 and further comprising comparing the stylistic forms of all of the sentences in a document in accordance with predetermined criteria and outputting an observation of the comparison.

13. The method of Claim 12 and further comprising plotting the stylistic forms of the sentences on a graph in a comparative manner as a function of the location of the sentence in a document.

14. The method of Claim 10 and further comprising storing the thematic form of the sentences in the storage area in association with the contextual form of the sentence, the thematic form of the sentence comprised of the words in the sentence that are of the most strategic importance and that convey the essential meaning of the sentence, the words making up the thematic form comprised of the topic, the focus and the action.

15. The method of Claim 14 and further comprising determining if at least one of the thematic elements in a given sentence has occurred in a previous sentence within x sentences of the given sentence.

16. A writing analysis system method for a given language, comprising:
    a storage area for storing the contextual form of a sentence that embodies the contextual relationships of the words in the sentence and the definitional characteristics that are expressed by each of the words in the sentence, the contextual relationships and the expressed definitional characteristics based on linguistic principles of the given language;
    a processor for analyzing the contextual form of the sentence in accordance with writing principles that are observed by the general populace utilizing the given language as being a correct representation of the written use of the given language, said processor including means for generating an observation as to how the contextual form of the sentence compares with the writing principles; and
    means for outputting said observation.

17. The system of Claim 16 wherein the contextual form comprises a plurality of contextual constituent values that define the possible contextual relationships of words in a sentence for the given language, where only select ones of the contextual constituent values are expressed for a given sentence in the given language.

18. The system of Claim 16 wherein said writing principles comprise grammatical principles of the given language and said processor includes:
    means for determining if the sentence as embodied in the contextual form thereof agrees with said grammatical principles;and
    means for generating at least one observation if there is a disagreement between the contextual form of the sentence and said grammatical principles.

19. The system of Claim 16 wherein said writing principles comprise punctuation principles of the given language and said processor includes:
    means for determining if the sentence as embodied in the contextual form thereof agrees with said punctuation principles; and
    means for generating at least one observation if there is a disagreement between said punctuation principles and the contextual form of the sentence.

20. The system of Claim 16 wherein said writing principles comprise stylistic principles of the given language, said stylistic principles including observations about the style of the sentence in accordance with accepted writing styles, and said processor includes:

means for determining if the sentence as embodied in the contextual form thereof agrees with said stylistic principles; and

means for generating at least one observation if there is a disagreement between said stylistic principles and the contextual form of the sentence.

21. The system of Claim 16 wherein said writing principles comprise usage principles of the given language, said usage principles comprising accepted usage of words and groups of words in a sentence in the given language, and said processor includes:

means for determining if the sentence, as embodied in the contextual form thereof, agrees with said usage principles; and

means for generating at least one observation if there is a disagreement between said usage principles and the contextual form of the sentence.

22. The system of Claim 16 and further comprising:

means for receiving the textual input of the sentence; and

means for determining the contextual form of the sentence from the textual input of the sentence.

23. The system of Claim 22 wherein said means for determining the contextual form of the sentence comprises:

a lexicon for storing definitional characteristics for the plurality of words in the given language, the definitional characteristics of a word defining how the word exists in the given language;

means for determining which of the definitional characteristics in said lexicon are expressed by the word in the context of the sentence in accordance with predetermined linguistic principles that exist for the given language;

means for determining the contextual relationships of the words in the sentence in accordance with the predetermined linguistic principles for the given language; and

means for storing in said storage area the contextual relationships for each word in the sentence as the contextual form of the sentence.

24. The system of Claim 23 and further comprising:

testing means for testing each of the observations in accordance with one of a plurality of predetermined error principles and generating an associated error feedback signal for each of said error principles tested, each of said feedback signals being a function of the observation tested and the contextual form of the sentence, said feedback signals operable to alter the linguistic principles in a predetermined manner;

means for altering the linguistic principles of the given language in accordance with said generated feedback signals; and

means for redetermining the contextual form of the sentence with said altered linguistic principles.

25. The system of Claim 16 wherein:

the contextual form of the sentence stored in said storage area comprises the contextual form of a plurality of sentences that represent a document, each of the sentences having associated therewith a sentence number indicating its position in the document;

said storage area having stored therein the stylistic form of the sentence in association with the contextual form of the sentence, the stylistic form of the sentence comprising stylistic attributes of the words in the sentence that are based upon the contextual relationships and the expressed definitional characteristics of the words in accordance with predetermined stylistic criteria that relate to contextually oriented arrangements of the words in the sentence and the expressed definitional characteristics of the words in the sentence; and

further comprising:

means for comparing the stylistic forms of all of the sentences in a document in accordance with predetermined criteria; and

means for outputting an observation of the comparison.

26. The system of Claim 25 and further comprising means for plotting the stylistic forms of the sentences on a graph in a comparative manner as a function of the location of the sentence in a document.

27. The system of Claim 25 and further comprising means for storing the thematic form of the sentences in said storage area in association with the contextual form of the sentence, the thematic form of the sentence comprised of the words in the sentence that are of the most strategic importance and that convey the essential meaning of the sentence, the words making up the thematic form comprised of the topic, the focus and the action.

28. The system of Claim 27 and further comprising means for determining if at least one of the thematic elements in a given sentence has occurred in a previous sentence within x sentences of the given sentence.

29. The method of Claim I wherein the writing principles comprise grammatical, stylistic, punctuation and usage principles of the given language, the stylistic principles including observations about the style of the sentence in accordance with accepted writing styles and the usage principles comprising accepted usage of words and groups or words in a sentence in the given language and the step of analyzing comprises determining if the sentence as embodied in the contextual form thereof agrees with the grammatical, stylistic, punctuation and usage principles, and generating at least one observation if there is a disagreement between the contextual form of the sentence and the grammatical, stylistic, punctuation and usage principles.

30. The method of Claim 10 and further comprising storing in the storage area the contextual form of a plurality of sentences and storing the thematic form of the sentences in the storage area in association with the contextual form of the sentence, the thematic form of the sentence comprised of the words in the sentence that are of the most strategic importance and that convey the essential meaning of the sentence, the words making up the thematic form comprised of the topic, the focus and the action.

31. The system of Claim 16, wherein said writing principles comprise grammatical, stylistic, punctuation and usage principles of the given language, said stylistic principles including observations about the style of the sentence in accordance with accepted writing styles and said usage principles comprising accepted usage of words and groups of words in a sentence in the given language, and said processor includes:
      means for determining if the sentence as embodied in the contextual form thereof agrees with said grammatical principles; and means for generating at least one observation if there is a disagreement between the contextual form of the sentence and said grammatical principles;
      means for determining if the sentence as embodied in the contextual form thereof agrees with said punctuation principles; and
      means for generating at least one observation if there is a disagreement between said punctuation principles and the contextual form of the sentence;
      means for determining if the sentence as embodied in the contextual form thereof agrees with said stylistic principles; and
      means for generating at least one observation if there is a disagreement between said stylistic principles and the contextual form of the sentence;
      means for determining if the sentence, as embodied in the contextual form thereof, agrees with said usage principles; and
      means for generating at least one observation if there is a disagreement between said usage principles and the contextual form of the sentence.

32. The system of Claim 16 or Claim 25 and further comprising means for storing the contextual form of a plurality of sentences and means for storing the thematic form of the sentences in said storage area in association with the contextual form of the sentence, the thematic form of the sentence comprised of the words in the sentence that are of the most strategic importance and that convey the essential meaning of the sentence, the words making up the thematic form comprised of the topic, the focus and the action.

33. A method for defining the contextual form of at least a portion of a chaotic input stream, comprising:
      discriminating the chaotic input stream into its lowest definable elements, the lowest definable elements being those that have meaning and are capable of independent use;
      parsing the elements of the chaotic input stream into groups of elements, the groups of elements comprising the lowers recognizable components of the chaotic input stream able to convey information, each of the groups having context within the chaotic input stream, the form of which is defined by a plurality of contextual constituents;
      each of the elements having a plurality of possible contextual relationships within the chaotic input stream, at least one of which is expressed in the associated group of elements;

determining the contextual relationships that are expressed by each of the elements in a given one of the groups of elements;

determining the contextual constituents of a given one of the groups of elements, the contextual constituents defining the overall contextual relationships between all of the elements and the individual contextual relationships of the elements; and storing the contextual constituents.

34. A system for defining the contextual form of at least a portion of a chaotic input stream, comprising:

means for discriminating the chaotic input stream into its lowest definable elements, the lowest definable elements being those that have meaning and are capable of independent use;

a parsing device for parsing the elements of the chaotic input streams into groups of elements, the groups of elements comprising the lowest recognizable components of the chaotic input stream able to convey information, each of the groups having context within the chaotic input stream, the form of which is defined by a plurality of contextual constituents;

each of said elements having a plurality of possible contextual relationships within the chaotic input stream, at least one of which is expressed in said associated group of elements;

means for determining the contextual relationships that are expressed by each of said elements in a given one of said groups of elements;

means of determining said contextual constituents of a given one of said groups of elements, said contextual constituents defining the overall contextual relationships between all of said elements and the individual contextual relationships of said elements; and

a storage medium for storing said contextual constituents.

FIG. 1

FIG. 2

ADAPTIVE

25 DISCOURSE INPUT

28 CONVERSION PROCESS

30 DISCOURSE FORM – KNOWLEDGE DATABASE / CONTEXT THEME CONTENT TEMPORAL

32 EXTRACTION PROCESS → KNOWLEDGE

26 LEXICON DATABASE

INPUT STIMULUS

FIG. 4

58 ARBITER ⇒ ATTRACTOR VALUES ⇒ EXTERNAL ACCESS

54

52 52 52 52 52 52 52

(A) (A) ... (A)   (A) ... (A)   (A) ... (A)

56 INPUT CHARACTERISTICS CONTEXTUAL AND THEMATIC RELATIONSHIPS, STYLE AND WORD ORDER

WORDS

EP 0 466 516 A2

FROM EXTRACTION PROCESS

26 DISCOURSE INPUT

34 PRE-CONDITIONING

36 CONTEXT GENERATOR

40 THEME GENERATOR

42 CONTENT GENERATOR

44 TIME

46 DISCOURSE PERTINENCE GENERATOR

48 TOPIC FILTER

KNOWLEDGE DATABASE

CONTEXT
CONTEXT
THEME
STYLE
PERTINENCE

50

TO EXTRACTION PROCESS

38 LEXICON CONTEXTUAL, THEMATIC AND STYLE RELATIONSHIPS | CONNOTATIONAL RELATIONSHIPS

FIG. 3

FIG. 5

FIG. 6

## *FIG. 7*

THE   POOR   MAN   THE   SHIP

| ADJ | ADJ | N | ADJ | N | 1st PASS |
| ADJ | N | V | ADJ | N | 2nd PASS |

WORD # ——76

E1

POSSIBLE VERB ? —— F —— (A7)
78 ↓ T

NEXT NOMINAL ? —— F —— (A7)
80 ↓ T

E2

POSSIBLE TRANSITIVE ? —— F —— (A47)
82 ↓ T

CURRENT WORD IS NOT POSSIBLE AUXILIARY —— F —— (A47)
84 ↓ T

E3

PRIOR NOUN ? —— F —— (A47)
86 ↓ T

88 —— SET POSSIBLE VERB —— (A53)

E4

INTRANSITIVE VERB ? —— F —— SET TRANS = 1 —— (A47)
90 ↓ T

## *FIG. 8*

92
94
96

CONTEXT   THEME   STYLE

W1 W2 W3 W4 W5

FIG. 9

FIG. 11b

FIG. 11a

FIG. 10

EP 0 466 516 A2

## FIG. 12

210 — START REFLECTION LEVEL

IDENTIFY VERBS OF
COGNITION AND PERCEPTION
FLAGS: PERCEPTION
COGNITION
MENTAL
STATIVE EXTENSIVE
— 214

GIVE VALUE OF
15 FOR EACH VERB
— 216

COUNT NUMBER OF TIMES
FIRST PERSON PRONOUN USED
FLAGS: FIRST
NOMINATIVE
OBJECTIVE
(ONLY WITH
PASSIVE PRIMARY)
POSSESSIVE
PERSON
— 218

GIVE VALUE OF
15 FOR EACH USE
— 220

IDENTIFY NUMBER OF ADJUNCTS
FLAGS: ADJUNCT
VIEWPOINT
FORMULAIC
FOCUSING
ADDITIVE
LIMITING EXCLUSIVE
•
•
•
— 222

GIVE VALUE OF
5 FOR EACH ADJUNCT
— 224

IDENTIFY NUMBER OF DISJUNCTS
FLAGS: DISJUNCT
STYLE
ATTITUDINAL
EVIDENCE
•
•
•
— 226

A

---

A

GIVE VALUE
15 FOR EACH DISJUNCT
— 228

IDENTIFY VERB PHRASES
FLAGS: ATTITUDINAL (PAST)
HYPOTHETICAL
— 230

GIVE VALUE 5 FOR ATTITUDINAL
AND 15 FOR HYPOTHETICAL
— 232

IDENTIFY MAIN CLAUSE AND
SUBORDINATE CLAUSE(S)
— 234

GIVE VALUE 30 FOR EACH USE
OF FIRST PERSON PRONOUN
PLUS VERB OF PERCEPTION/VERB
OF COGNITION IN MAIN CLAUSE
— 236

IDENTIFY AUXILARY MODALS
FLAGS: ABILITY          5
PAST ABILITY     5
PERMISSION       5
•
•
VOLITION         10
LOGICAL NECESSITY 15
WILLINGNESS      10
INTENTION        15
LEGAL CONJUNCTION 20
— 238

GIVE VALUES FOR
AUXILARY MODALS
— 240

ADD ALL VALUES TO PROVIDE
REFLECTION LEVEL OF SENTENCE
— 242

ADD REFLECTION LEVELS OF
SENTENCE TO GIVE REFLECTION
LEVEL OF TEXT
— 246

DIVIDE TEXT REFLECTION LEVEL BY
NUMBER OF SENTENCES IN TEXT TO
GIVE AVERAGE REFLECTION LEVEL
— 248

END — 250

## FIG. 13

START READER RETENTION LEVEL — 256

STEP ONE — 257

COUNT NUMBER OF THEMATIC ELEMENTS — 258

WEIGHT
1 = 115
2 = 110
3 = 100
— 260

STEP TWO — 261

262 — NUMBER THEMATIC ELEMENTS > 3 ?

N

Y

ADD 1 TO NUMBER — 264

266 — NC ?

N

Y

X1 — 268

270 — REL CL ?

N

Y

X1 — 272

A

A

274 — SUB CL ?

N

Y

X2 — 276

278 — MC ?

N

Y

X5 — 280

TOTAL STEP TWO — 282

STEP ONE – STEP TWO — 284

READER RETENTION OF SENTENCE — 286

TOTAL READER RETENTION LEVELS OF SENTENCES IN TEXT — 288

DIVIDE BY NUMBER OF SENTENCES –AVERAGE READER RETENTION LEVEL– — 290

END — 292

*FIG. 14*

START READABILITY — 294

FLOW — 296

PAUSE — 298

FLOW — PAUSE — 300

HUMAN INTEREST — 302

CLIMATIC STYLE — 304

MATURITY — 306

MONOTONY — 308

MATURITY—MONOTONY — 310

VERB CLARITY — 312

ACTION — 314

VERB STRENGTH — 316

CLARITY — 318

AMBIGUITY — 320

CLARITY — AMBIGUITY — 322

COHESION — 324

TOTAL = — 326

READABILITY INDEX LEVEL — 327

DIVIDE BY NUMBER OF SENTENCES — AVERAGE READABILITY INDEX LEVEL — OF SENTENCE IN TEXT — 328

END — 330

*FIG. 17*

168 — START

190 — GET EACH WORD SEQUENTIALLY

192 — TOTAL PARTS OF SPEECH

194 — GET PERCENT OF PARTS OF SPEECH

196 — PARTICIPLE ? — N

Y

198 — INCREASE IMPORTANCE FACTOR

200 — VERB ? — N

Y

202 — INCREASE IMPORTANCE FACTOR

204 — SORT IN LEAST AMBIGUOUS, MOST IMPORTANT ORDER

DONE

EP 0 466 516 A2

## FIG. 15

START

140 — TEXT IN

170 — PARAGRAPH ANALYSIS

Y — PARAGRAPH END — 142

N

DOCUMENT END? — 172

Y

174 — DOCUMENT ANALYSIS

DONE

176

SENTENCE RECOGNITION — 144

TEXT OUT ? — 146

N

Y

148 — PROPER PHRASE RECOGNITION

150 — PUNCTUATION SEPARATION

152 — ROOT/INFLECT KEY FORMATION

ERROR ? — 154

N

DE-ENCRYPTION ALGORITHM AND HASH RETRIEVE — 156

MEMORY SETUP — 158

INITIALIZE IC ANALYSIS — 160

PROPER NOUN TAGGING — 162

PROPER NOUN INDEX — 164

PHRASAL PREFORMATION AND SUBSTITUTION — 166

AMBIGUITY PARSE ORDERING — 168

OUTPUT

## FIG. 16

START — 152

GET NEXT WORD — 178

180

CHECK WORD ON FILE ? — Y

N

REMOVE SUFFIX — 182

186

ON FILE ? — 184 — Y — INFLECT WORD

N

FORM CHARACTERISTIC OF WORD FROM SUFFIX BY ITSELF AND MAKE EDUCATED GUESS AT WORD FORM

188

FIG. 18

FIG. 19

FIG. 20

60

## FIG. 23

398 — ( START )

TUTORIAL ? — N

400

↓ Y

SELECT ERRORS WITH VARIABLES — 402

READ IN TUTORIAL ASSOCIATED WITH ERROR — 404

DISPLAY — 406

( END ) — 408

## FIG. 21

366 — ( START )

INPUT PARAMETERS ? — N

368

370

DEFAULT

↓ Y

DETERMINE CHARACTERISTIC SET — 372

INPUT TYPE, LOCATION AND NUMBER OF SELECTED GRAPHS — 374

PLOT SELECTED STYLE INDEXES — 376

CALCULATE AND PLOT WEIGHTED AVERAGE — 378

PLOT COMPARISON CHART — 380

( END ) — 382

## FIG. 24

410 — ( START )

MARKING ? — N

412

↓ Y

GET WORDS OF SENTENCE — 414

GET ERRORS ASSOCIATED WITH SENTENCE — 416

GET MARKING SYMBOLS ASSOCIATED WITH ERROR — 418

OUTPUT — 420

( END ) — 422

## FIG. 22a

READER RETENTION vs SENTENCES

384
388
386

## FIG. 22b

HUMAN INTEREST vs SENTENCES

392
390
394